# EUROPEAN PATENT SPECIFICATION

(11) **EP 2 383 395 B1**
(45) Date of publication and mention of the grant of the patent: **25.03.2015**
(21) Application number: 09834577.0
(22) Date of filing: 31.07.2009
(51) Int. Cl.: E02F 9/26, G01M 17/007, G05B 23/02, G06Q 50/00

(54) **DIAGNOSTIC INFORMATION PROVIDING SYSTEM FOR CONSTRUCTION MACHINE**
SYSTEM ZUR BEREITSTELLUNG VON DIAGNOSEINFORMATIONEN FÜR EINE BAUMASCHINE
SYSTEME DE FOURNITURE D'INFORMATIONS DE DIAGNOSTIC POUR MACHINE DE CONSTRUCTION

(30) Priority: 26.12.2008 JP 2008335077
(43) Date of publication of application: 02.11.2011
(73) Proprietor: Hitachi Construction Machinery Co., Ltd., Bunkyo-ku, Tokyo 112-8563 (JP)
(72) Inventor: SHIBATA Kouichi, Tsuchiura-shi Ibaraki 300-0013 (JP); FURUNO, Yoshinori, Tsuchiura-shi Ibaraki 300-0013 (JP)
(74) Representative: Beetz & Partner mbB
(86) International application number: PCT/JP2009/063681
(87) International publication number: WO 2010/073771

(56) References cited:
- WO-A1-2006/085469
- WO-A2-2008/027129
- JP-A- 2000 259 729
- JP-A- 2004 021 286
- US-A1- 2006 090 379

## Description

### Technical Field

The present invention relates to a diagnostic information supply apparatus for a construction machine, provided at a position remote from the construction machine in order to acquire and display operational data of the machine.

### Background Art

In construction machines such as hydraulic excavators, in case of an alarm or trouble, for example, or at fixed periods, servicemen directly visit the operating sites of the construction machines, acquire operational data and more on the machines, and provide maintenance. In addition, a construction machine information supply system has been proposed in recent years (e.g., reference to Patent Document 1) in which, by utilizing the Internet or other information communications, operational data and more on a plurality of construction machines is transmitted to one place and managed integratedly.

The construction machine information supply system, described in Patent Document 1, includes: a machine-side controller mounted on each of the multiple hydraulic excavators in order to collect machine operational data; a hand-held terminal that, for example, a serviceman carries with him to download operational data and machine body data from the machine-side controller; a user-side personal computer placed, for example, in an office near an operating site of the hydraulic excavator in order to download data from the hand-held terminal; a main server installed, for example, at a manufacturer of the excavator; and an intermediate server installed, for example, at a dealer who provides services directly to users. The user-side personal computer, the main server, and the intermediate server are interconnected via a communication line, for example, an Internet-based public line.

The user-side personal computer has a capability to save the operational data (more specifically, e.g., chronological data relating to alarm/trouble occurrence information, engine on/off information, engine key switch on/off information, operational-state physical quantities, and other information) and the machine body data (more specifically, a model number, serial number, etc.) of the hydraulic excavator that have been downloaded from the hand-held terminal. The user-side personal computer has a capability to process and display the hydraulic excavator data in accordance with a preinstalled application program. The user-side personal computer displays an alarm/trouble occurrence information screen as one specific example. On the alarm/trouble occurrence information screen, items of alarm/trouble are listed in a vertical direction, and daily occurrence rates of the alarm/trouble are displayed in a horizontal direction. More specifically, examples of alarms/trouble are an alternator charge alarm, a decrease in engine coolant level, an engine coolant temperature/overheat alarm, a decrease in hydraulic fluid level, a hydraulic fluid temperature/overheat alarm, a decrease in engine oil pressure, a decrease in pump transmission oil pressure, an engine emergency stop switch alarm, a buzzer stop alarm, a decrease in fuel level, pump contamination, air cleaner clogging, auto-lubricator trouble, engine controller trouble, an increase in exhaust temperature, engine trouble, and so on. Dates on which some alarm or trouble has occurred ten times or more are marked by a red box or frame. Dates on which the alarm or trouble has occurred one to nine times are marked with a yellow box or frame, the number of times of the occurrence is displayed as numeral in the yellow box or frame. This display allows management of alarm/trouble logs and confirmation of frequent alarms and troubles.

The main server conducts an automatic search via the intermediate server to check for new data loaded into the user-side personal computer, and retrieves any new such data with the user's consent. The main server and the intermediate server both contain substantially the same application program as that of the user-side personal computer, and both can process and display the hydraulic excavator data in accordance with the program.

### Prior Art References

### Patent Document

Patent Document 1: JP-2004-21286-A (see Fig. 46 and more)

### Summary of the Invention

### Problems to be Solved by the Invention

Construction machines, especially, large-size hydraulic excavators and other construction machines, are placed in service for the earth-and-rock excavation at expansive working sites. These large hydraulic excavators are generally put into continuous operation for improved productivity. In the event of trouble, these hydraulic excavators need to have their operation stopped for repairs, and the particular degree of the trouble might necessitate an extended period of operational shutdown. If this is the case, production by the hydraulic excavator must be interrupted, so that production schedule processes or steps need changing. In this perspective, it is being desired that construction machine diagnosing accuracy be enhanced and that necessary and appropriate measures be taken rapidly.

The foregoing user-side personal computer and the like display a large number of alarm/trouble items and the daily occurrence rates of alarm/trouble on one screen. Thus, even if it has been possible to confirm that a plurality of kinds of alarm/trouble events are occurring on the same day, the chronological order of the time when the alarm/trouble events occurred has not been verifiable. Therefore, it can not judge whether the probable causes of the alarm/trouble events have a relationship. Also, about the judgment of whether the plurality of alarm/trouble events are likely to have some association with the probable causes, it has depended greatly upon the experience, skills, and other factors of the worker. Accordingly, it has admitted of improvement in diagnosing accuracy.

An object of the present invention is to provide an information supply system for a construction machine, capable of enhancing alarm/trouble cause checking accuracy.

### Means for Solving the Problems

(1) In order to achieve the above object, an aspect of the present invention is a diagnostic information supply apparatus for a construction machine, provided at a position remote from the construction machine in order to acquire chronological data on machine alarm/trouble occurrence information, chronological data on engine on/off and engine key switch on/off information, and chronological data on operational-state physical quantities. The apparatus includes: item list display means that displays an item list of acquired alarm/trouble occurrence information; first alarm/trouble occurrence information selection means for an operator to select first alarm/trouble occurrence information from the item list of acquired alarm/trouble occurrence information, displayed by the item list display means; first storage means that previously stores combinations of alarms/trouble events which are likely to have some association with probable causes; second alarm/trouble occurrence information selection means that automatically selects second alarm/trouble occurrence information with respect to the first alarm/trouble occurrence information selected by the first alarm/trouble occurrence information selection means, on the basis of the combination prestored by the first storage means; and alarm/trouble data display means that displays, together with the chronological data on the engine on/off and key switch on/off information, chronological data on the alarm/trouble occurrence information selected by the alarm/trouble occurrence information selection means.
(2) In above item (1), when a command that means automatic selection of the second alarm/trouble occurrence information is issued through operator entry, the second alarm/trouble occurrence information selection means desirably selects the second alarm/trouble occurrence information with respect to the first alarm/trouble occurrence information selected by the first alarm/trouble occurrence information selection means, on the basis of the combination prestored by the first storage means.
(3) In above item (1) or (2), the alarm/trouble data display means desirably includes graph display means that displays a chronological event information display screen to show in graphical form, together with the chronological data relating to the engine on/off and key switch on/off information, the chronological data relating to the alarm/trouble occurrence information selected by the alarm/trouble occurrence information selection means.
(4) In above item (3), the system desirably further includes: third alarm/trouble occurrence information selection means for operator to select one piece of alarm/trouble occurrence information and occurrence time of the alarm/trouble on the chronological event information display screen displayed by the graph display means, and then to specify switching to a chronological operational-state physical quantities display screen; second storage means that previously stores combinations of alarm/trouble event and operational-state physical quantities as useful information for cause checking of the alarm/trouble event; operational-state physical quantities selection means that selects operational-state physical quantities with respect to the alarm/trouble occurrence information selected by the third alarm/trouble occurrence information selection means, on the basis of the combination prestored by the second storage means; and operational-state data display means that displays the chronological operational-state physical quantities display screen to show in graphical form, together with chronological data on the engine on/off and key switch on/off information, chronological data on the operational-state physical quantities selected by the operational-state physical quantities selection means in the period that is set so as to include the occurrence time of the alarm/trouble selected by the third alarm/trouble occurrence information selection means.
(5) In any one of above items (1) to (4), the alarm/trouble data display means desirably includes listing means that displays in list form, together with the chronological data on the engine on/off and key switch on/off information, the chronological data on the alarm/trouble occurrence information selected by the alarm/trouble occurrence information selection means.
(6) In above item (5), the listing means desirably displays starting and ending time of alarm/trouble occurrence, engine on/off switching time, and key switch on/off switching time together, as well as differences in time among the three kinds of time.

### Effect of the Invention

According to the present invention, alarm/trouble cause checking accuracy is enhanced.

### Brief Description of the Drawings

Fig. 1 is a schematic diagram that represents a configuration of a construction machine information supply system in an embodiment of the present invention;
Fig. 2 is a block diagram that represents a functional configuration of a main server and intermediate servers in the embodiment of the present invention, the diagram also explaining a flow of data;
Fig. 3 is a schematic diagram that represents an example of, together with sensors, a configuration of a hydraulic system mounted on a hydraulic excavator in the embodiment of the present invention;
Fig. 4 is a block diagram that represents a functional configuration of a machine-side controller in the embodiment of the present invention;
Fig. 5 is a diagram that represents an example of a structure of data downloaded in the embodiment of the present invention from the machine-side controller into a hand-held terminal;
Fig. 6 is a block diagram that represents a functional configuration of a user-side personal computer in the embodiment of the present invention;
Fig. 7 shows a standard screen displayed when a diagnostic information display program is started;
Fig. 8 shows an event occurrence information screen;
Fig. 9 shows a chronological event information display screen displayed in an operational data display region;
Fig. 10 shows an example of a combination of alarms/trouble events which are likely to have some association with probable causes;
Fig. 11 shows an event information listing screen;
Fig. 12 shows a chronological operational-state physical quantities display screen displayed in the operational data display region, the screen displaying when a TIME display mode is selected;
Fig. 13 shows a chronological display setup screen;
Fig. 14 shows another chronological operational-state physical quantities display screen displayed in the operational data display region, the screen displaying when an HOUR METER display mode is selected;
Fig. 15 shows an operational-state physical quantities listing screen;
Fig. 16 shows a scatter diagram display setup screen;
Fig. 17 shows an operational-state physical quantities scatter diagram display screen displayed in the operational data display region, the screen displaying when a GRAPH display mode is selected;
Fig. 18 shows an example of combinations of operational-state physical quantities which are likely to have some association with respect to alarm/trouble event;
Fig. 19 shows another operational-state physical quantities scatter diagram display screen displayed in the operational data display region, the screen displaying when a FULL-RANGE GRAPH display mode is selected; and
Fig. 20 is a diagram for explaining menu bar and toolbar configurations.

### Mode for Carrying Out the Invention

An embodiment of the present invention is described below referring to the accompanying drawings.

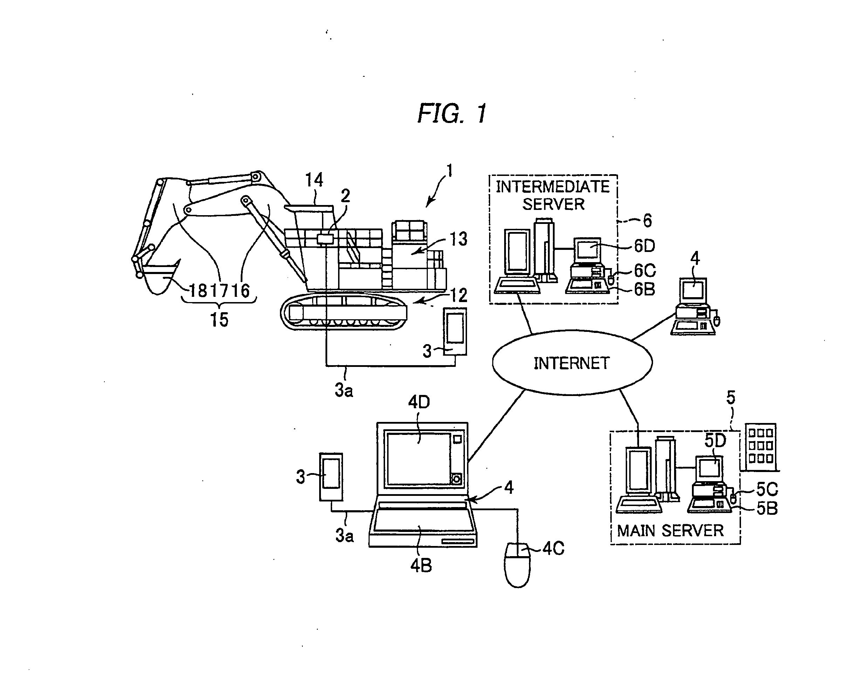

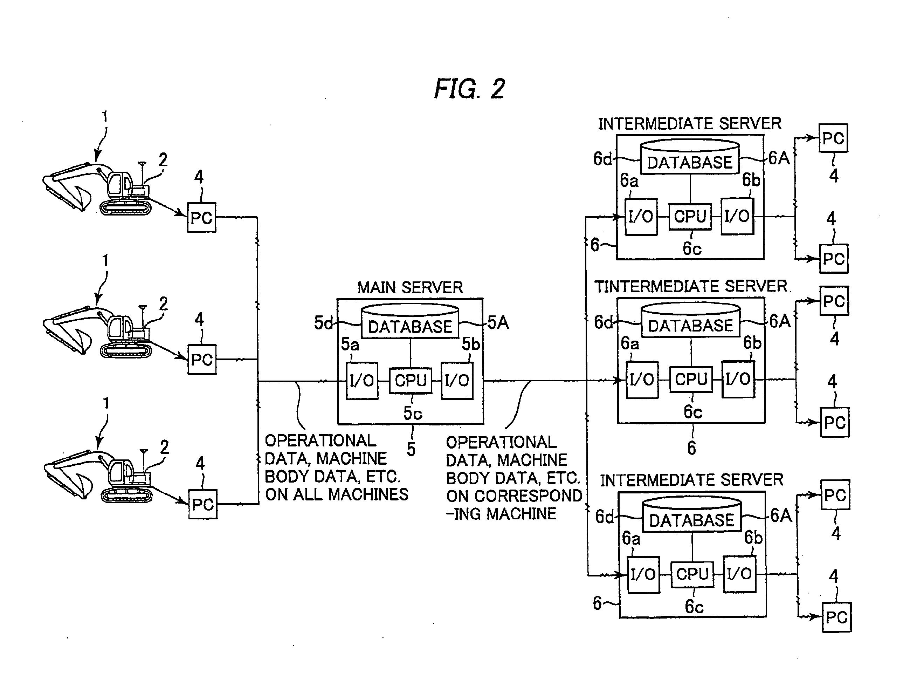

Fig. 1 is a schematic diagram that represents a configuration of a construction machine information supply system in the embodiment of the present invention. Fig. 2 is a block diagram that represents a functional configuration of a main server and intermediate servers, the diagram also explaining a flow of data.

Referring to Figs. 1 and 2, the construction machine information supply system includes: a machine-side controller 2 mounted on each of a plurality of onsite-operating hydraulic excavators 1 to collect operational data therefrom, one hydraulic excavator 1 only being shown as a representative in Fig. 1; a hand-held terminal 3 capable of communicating with the controller 2 either via a cable 3a, for example, or under a wireless scheme; a user-side personal computer (information terminal) 4 disposed in an office or the like, near the operating site of the hydraulic excavator 1, and capable of communicating with the hand-held terminal 3 either via the cable 3a, for example, or under the wireless scheme; a main server 5 installed, for example, at a manufacturer of the hydraulic excavator 1 or, for example, at an information management company consigned by the manufacturer; and an intermediate server 6 provided at, for example, a dealer who directly provides maintenance services and the like to users in each of small/middle-scale regions such as countries, areas, or prefectures. The user-side personal computer 4, the main server 5, and the intermediate server 6 are interconnected via a communication line, for example an Internet-based public line.

For example, a serviceman carries the hand-held terminal 3 with him and connects it to the controller 2 of the hydraulic excavator 1 via the cable 3a. Then, operational data that the controller 2 has collected from the hydraulic excavator 1 (more specifically, chronological data relating alarm/trouble occurrence information, engine on/off information, engine key switch on/off information, operational-state physical quantities, and others) is downloaded together with machine body data (more specifically, a model number, serial number, and more, of the hydraulic excavator 1) into the hand-held terminal 3, by performing predetermined operations with the hand-held terminal 3 or the controller 2. After this, the serviceman disconnects the cable 3a from the machine-side controller 2, then carries the hand-held terminal 3 again, and connects the hand-held terminal 3 to the user-side personal computer 4 via the cable 3a. The operational data and machine body data relating to the hydraulic excavator 1 are downloaded into the user-side personal computer 4 by performing predetermined operations with the hand-held terminal 3 or the user-side personal computer 4.

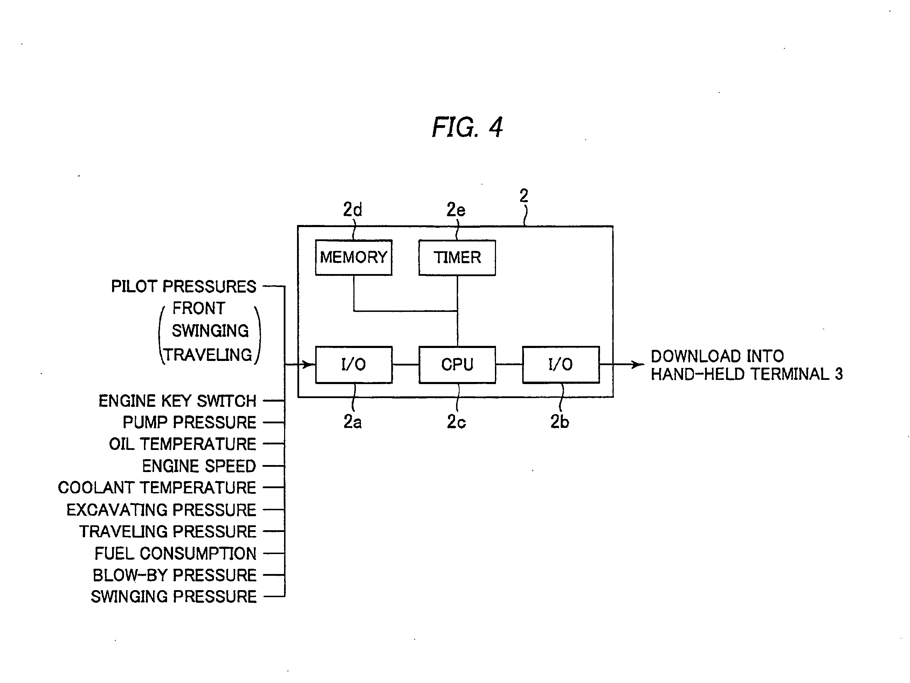

The user-side personal computer 4 saves the operational data and machine body data relating to the hydraulic excavator 1 that has been downloaded from the hand-held terminal 3. The user-side personal computer 4 is also designed so that in accordance with a preinstalled diagnostic information display program or the like, in response to operations on a keyboard 4B and a mouse 4C, the computer 4 processes the hydraulic excavator data saved in a main unit 4A (see Fig. 4 that follows) of the computer and displays it on a display unit 4D. Further details will be later described.

The main server 5 includes input/output interfaces 5a and 5b, a central processing unit (CPU) 5c, and a saving device 5d that forms a database 5A. In addition, the main server 5 includes, although not shown, a ROM that installs a control program to make the CPU 5c execute arithmetic processing, and a RAM for temporary storage of any data being computed. The intermediate server 6 includes input/output interfaces 6a and 6b, a central processing unit (CPU) 6c, and a saving device 6d that forms a database 6A. The intermediate server 6 further includes, although not shown, a ROM that installs a control program to make the CPU 6c execute arithmetic processing, and a RAM for temporary storage of any data being computed.

The main server 5 automatically searches for newly stored data in the user-side personal computer 4 via the intermediate server 6, and if the new data is present, will acquire the data with a consent of the user. In addition to the operational data and machine body data relating to the hydraulic excavator 1, the user-side personal computer 4 may save any maintenance and check data manually entered by the serviceman during periodic checks, such as repair data, and the main server 5 may acquire such data as well. Furthermore, for example, in the case when the user manages the hydraulic excavators 1 operating at a plurality of sites, the main server 5 transmits data on the corresponding hydraulic excavators 1 to the user-side personal computer 4 via the intermediate server 6.

The main server 5, as with the user-side personal computer 4, is designed so that in accordance with the preinstalled diagnostic information display program or the like, in response to operations on a keyboard 5B and a mouse 5C, the server 5 processes the hydraulic excavator data saved in the database 5A and displays it on a display unit 5D. Additionally, the intermediate server 6, as with the user-side personal computer 4, is designed so that in accordance with the preinstalled diagnostic information display program or the like, in response to operations on a keyboard 6B and a mouse 6C, the server 6 processes the hydraulic excavator data saved in the database 6A and displays it on a display unit 6D.

The hydraulic excavator 1 includes a track body 12, a swing body 13 pivotably provided on the track body 12, a cabin 14 provided on a front left side of the swing body 13, and a front work device (excavating device) 15 provided centrally in front of the swing body 13 so as to be vertically inclinable. The front work device 15 is composed of a boom 16 turnably provided on the swing body 13, an arm 17 turnably provided at a distal end of the boom 16, and a bucket 18 turnably provided at a distal end of the arm 17.

The present embodiment assumes that the hydraulic excavator 1 is a large-size excavator (see Fig. 1) with a machine body weight of several hundreds of tons, usually used at mines and the like, but does not limit application to this type of machine. That is, the embodiment may instead be applied to, for example, a middle-size excavator (see Fig. 2) with a machine body weight of several tens of tons, operative at construction worksites and the like, or a small-size excavator operative at small-scale worksites.

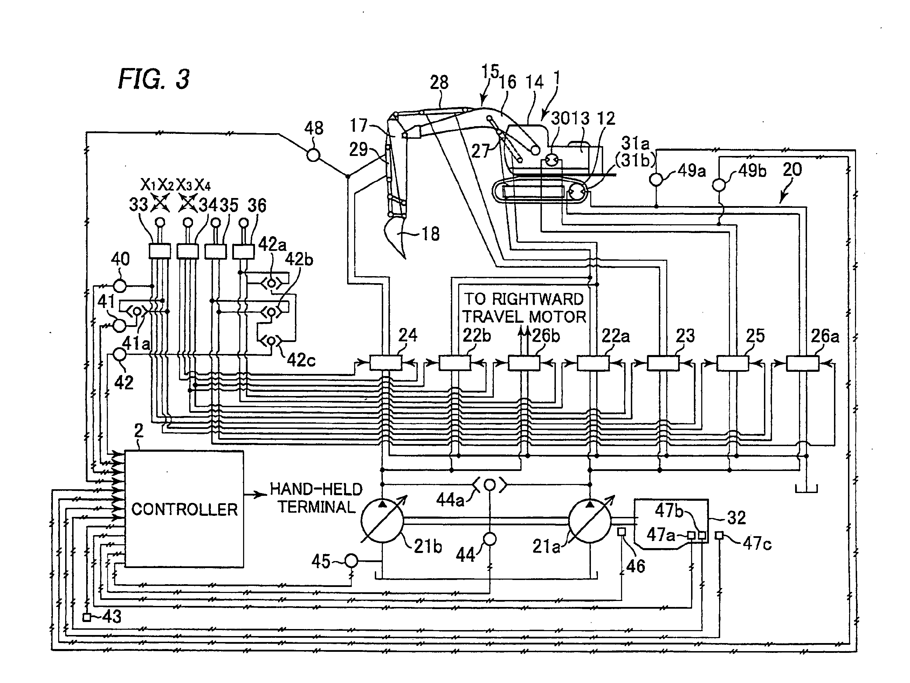

Fig. 3 is a schematic diagram that represents an example of, together with sensors, a configuration of a hydraulic system mounted on the hydraulic excavator 1.

Referring to Fig. 3, the hydraulic system 20 mounted on the hydraulic excavator 1 includes, for example, hydraulic pumps 21a and 21b, boom control valves 22a and 22b, an arm control valve 23, a bucket control valve 24, a swinging control valve 25, traveling control valves 26a and 26b, a boom cylinder 27, an arm cylinder 28, a bucket cylinder 29, a swing motor 30, and traveling motors 31a and 31b.

The hydraulic pumps 21a, 21b each deliver a hydraulic fluid when rotationally driven by a diesel engine 32 having an electronic governor type of fuel injector (not shown). The control valves 22a, 22b, 23, 24, 25, 26a, 26b each control a flow (flow rate and flow direction) of the hydraulic fluid supplied from the hydraulic pumps 21a, 21b to the hydraulic actuators 27, 28, 29, 30, 31a, 31b, thus driving the boom 16, the arm 17, the bucket 18, the swing body 13, and the track body 12. The hydraulic pumps 21a, 21b, the control valves 22a, 22b, 23, 24, 25, 26a, 26b, and the engine 32 are installed in a storage compartment (engine room) at rear of the swing body 13.

Control lever devices 33 to 36 are provided for the control valves 22a, 22b, 23, 24, 25, 26a, 26b. Operating a control lever of the control lever device 33 in one direction X1 of a cross generates an arm-crowding pilot pressure or an arm-dumping pilot pressure, and applies the pilot pressure to the arm control valve 23. Operating the control lever of the control lever device 33 in another direction X2 of the cross generates a rightward swinging pilot pressure or a leftward swinging pilot pressure, and applies the pilot pressure to the swinging control valve 25. Operating a control lever of the control lever device 34 in one direction X3 of a cross generates a boom-raising pilot pressure or a boom-lowering pilot pressure and applies the pilot pressure to the boom control valves 22a, 22b. Operating the control lever of the control lever device 34 in another direction X4 of the cross generates a bucket-crowding pilot pressure or a bucket-dumping pilot pressure and applies the pilot pressure to the bucket control valve 24. Operating control levers of the control lever devices 35, 36 generates a leftward traveling pilot pressure and a rightward traveling pilot pressure, and applies the pilot pressures to the traveling control valves 26a, 26b. The control lever devices 33 to 36 are arranged, with the controller 2, in the cabin 14.

The Sensors are further provided in the hydraulic system 20 described above. More specific examples of each such sensor are described below. A sensor 40 is a pressure sensor that detects the arm-crowding pilot pressure as a control signal for the front work device 15. A sensor 41 is a pressure sensor that detects the swinging pilot pressure, which has been acquired via a shuttle valve 41a, as a swinging control signal. A sensor 42 is a pressure sensor that detects the traveling pilot pressure, which has been acquired via shuttle valves 42a, 42b, or 42c, as a traveling control signal. A sensor 43 is a sensor that detects an on/off state of a key switch for specifying on/off of electric power and start/stop of the engine 32. A sensor 44 is a pressure sensor that detects a delivery pressure of the hydraulic pumps 21a, 21b, that is, the pump pressure acquired via a shuttle valve 44a. A sensor 45 is an oil temperature sensor that detects a temperature of the hydraulic fluid (oil temperature). A sensor 46 is a revolving speed sensor that detects a revolving speed of the engine 32. A sensor 47a is a fuel sensor that detects the amount of fuel injected by the fuel injector of the engine 32 (in other words, fuel consumption). A sensor 47b is a pressure sensor that detects a blow-by pressure of a cylinder in the engine 32. A sensor 47c is a temperature sensor that detects a temperature of a coolant (radiator water) for cooling the engine 32. A sensor 48 is a pressure sensor that detects, as an excavating pressure of the front work device 15, for example, a pressure at a bottom side of the bucket cylinder 29 (or the arm cylinder 28). A sensor 49a is a pressure sensor that detects a traveling pressure, that is, a pressure of the traveling motors 31a, 31b (e.g., a maximum pressure of the two traveling motors may be detected via a shuttle valve not shown). A sensor 49b is a pressure sensor that detects a swinging pressure, that is, a pressure of the swinging motor 30. Other sensors not shown are also provided. Detection signals from the sensors described above are all sent to the controller 2.

Fig. 4 is a block diagram that represents a functional configuration of the machine-side controller 2.

The machine-side controller 2 in Fig. 4 has input/output interfaces 2a and 2b, a CPU 2c, a memory 2d, and a timer 2e.

The input/output interface 2a receives the detection signals from the above-described sensors as input signals, and the CPU 2c uses the timer 2e (including a clock function) to process the received detection signals into predetermined operational data and store this data into the memory 2d. More specifically, the CPU 2c stores sensor-detected values (to name a few, the above-mentioned pilot pressures, pump pressure, oil temperature, engine speed, fuel consumption, blow-by pressure, coolant temperature, excavating pressure, traveling pressure, swinging pressure, etc.) in association with dates and time. In addition, the CPU 2c determines, from the detected values such as engine speed, whether the engine 32 is operating, calculates an engine operation time, and stores the calculated engine operation time in association with dates and time. The CPU 2c repeats the above process at predetermined cycles (say, every 30 minutes) while the controller 2 has its power supply on. As a result, in addition to the front-control time, swinging control time, and traveling lever control time detected during the predetermined cycle time, an average pump pressure, an average oil temperature, an average engine speed, average fuel consumption, an average blow-by pressure, an average coolant temperature, an average excavating pressure, an average traveling pressure, and an average swinging pressure, an engine operation time, etc. are stored into the memory 2d. Cumulative time-based values for each elapsed cycle period, that is, a cumulative front-control time, a cumulative swinging control time, a cumulative traveling lever control time, and a cumulative engine operation time are calculated separately for each cycle and are stored and updated in the memory 2d.

The CPU 2c also stores engine on/off information and key switch on/off information in association with respective dates and time. In addition, if an alarm or trouble occurs (more specifically, when the sensor-detected value is compared with at least one preset threshold level, if the sensor value is determined to indicate a state that requires an alarm to be issued or indicate that trouble has occurred), the appropriate information will be stored in association with an occurrence date and time of the alarm or trouble. The machine body data is stored in the memory 2d of the machine-side controller 2 beforehand.

The data stored in the memory 2d of the machine-side controller 2 is downloaded into the hand-held terminal 3 via the input/output interface 2b and the cable 3a by the predetermined operations on the hand-held terminal 3 or the machine body controller 2.

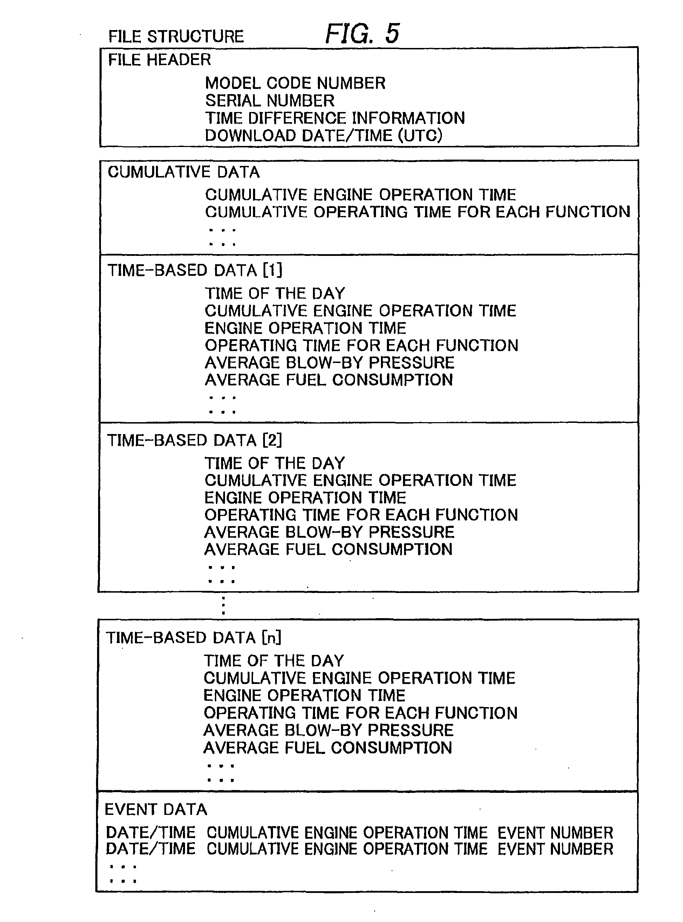

Fig. 5 is a diagram that represents a structure of the data downloaded from the machine-side controller 2 into the hand-held terminal 3.

The data downloaded into the hand-held terminal 3 is arranged as independent files for each download operation. At a beginning of each file is provided a file header, which is composed of the model number, serial number, and other machine body data relating to the hydraulic excavator 1, downloading time of the day (this time may, for example, be displayed in terms of some standard time and at the same time, include time-difference information and the like), and other data or information.

The file is equivalent at its main section to operational data, and the main section contains initial cumulative data, time-based data obtained during each predetermined cycle period, and event data. The initial cumulative data is composed of the above-mentioned cumulative engine operation time data and various cumulative control time data (e.g., the cumulative front-control time, the cumulative swinging control time, and the cumulative traveling lever control time). The time-based data is composed of the time of the day when the data was acquired, the cumulative engine operation time up to an immediately previous cycle, the engine operation time in a current cycle, various control time data (e.g., the front-control time, the swinging control time, and the traveling lever control time), the average blow-by pressure, the average fuel consumption, the average pump pressure, the average oil temperature, the average engine speed, the average coolant temperature, the average excavating pressure, the average traveling pressure, and the average swinging pressure. The event data is composed of the date and time when event information was acquired (more specifically, this event information includes the engine on/off information, the key switch on/off information, and the alarm/trouble occurrence information), the cumulative engine operation time corresponding to the occurrence date and time of the event, and a designation number of the event.

The data that has been downloaded from the controller 2 into the hand-held terminal 3 in the above file format is further loaded into the user-side personal computer 4 in substantially the same file format.

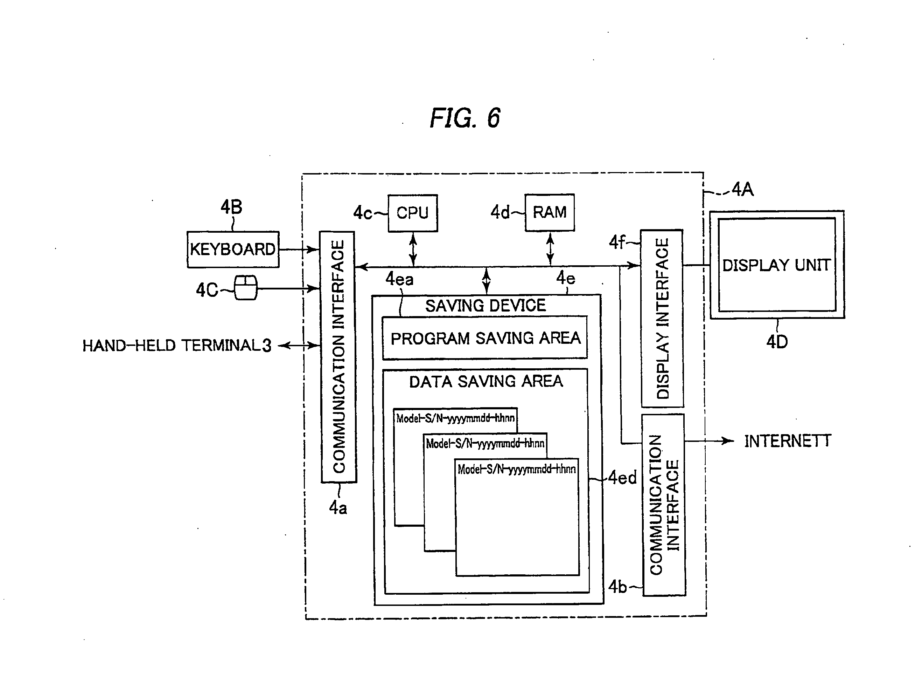

Fig. 6 is a block diagram that represents a functional configuration of the user-side personal computer 4.

The user-side personal computer 4 in Fig. 1 as well as in Fig. 6 includes the personal computer main unit 4A, the keyboard 4B, the mouse 4C, and the display unit 4D. The personal computer main unit 4A includes communication interfaces (I/O) 4a, 4b, a CPU 4c, a RAM 4d, a saving device (storage means) 4e with a program-saving area 4ea and a data-saving area 4eb, and a display interface 4f.

In addition to receiving control signals from the keyboard 4B and the mouse 4C, the communication interface 4a receives data from the hand-held terminal 3 and stores the data in the data-saving area 4eb of the saving device 4e.

In accordance with the diagnostic information display program previously stored in the program-saving area 4ea of the saving device 4e, in response to the control signals from the keyboard 4B and the mouse 4C, the CPU 4c processes and displays the data saved in the saving device area 4ea of the saving device 4e. At this time, the data that the CPU 4c is processing is not only temporarily stored into the RAM 4d, but also output to the display unit 4D via the display interface 4f.

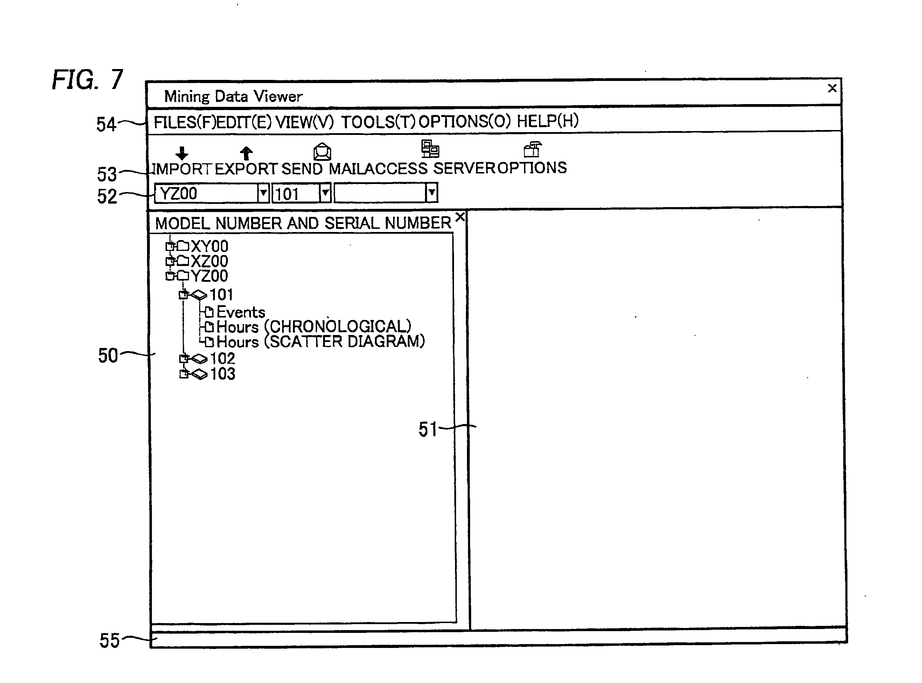

Next, screen display based on the diagnostic information display program is described below taking the user-side personal computer 4 as an example. Fig. 7 shows a standard screen displayed when the diagnostic information display program is started.

The standard screen shown in Fig. 7 is composed of a first machine selection area 50 positioned at left, an operational data display area 51 positioned at the right of the first machine selection area 50, a second machine selection area 52 positioned above the first machine selection area 50 and the operational data display area 51, a toolbar 53 positioned further above the second machine selection area 52, a menu bar 54 positioned further above the toolbar 53, and a status bar 55 positioned below the first machine selection area 50 and the operational data display area 51.

In the first machine selection area 50, the machine body data stored in the data-saving area 4eb of the saving device 4e, that is, the model numbers and serial numbers of hydraulic excavators 1, are hierarchically displayed with operational data display items, indicating that the model numbers and serial numbers of the hydraulic excavators 1 and the operational data display items can be selected. For example, if an operator selects any one (in Fig. 7, YZOO) of the multiple model numbers (in Fig. 7, XYOO, XZOO, and YZOO) by moving a cursor to the screen-displayed corresponding character string with the mouse 4C and clicking on the character string (hereinafter, the selection of a display item means such an operation), the plurality of serial numbers (in Fig. 7, serial numbers 101, 102, and 103) corresponding to the selected model number will be displayed in associated form. Further selecting one of these serial numbers displays "Events", "Hours (Chronological)", and "Hours (Scatter diagram)" as the operational data display items associated with the selected serial number. The screen display process to be described later herein is executed when the operator selects either "Events", "Hours (Chronological)", or "Hours (Scatter diagram)".

The second machine selection area 52 enables the model number, serial number, and operational data display item of a hydraulic excavator 1 to be selected in a pull-down menu format. The second machine selection area 52 also displays the selected model number, serial number, and operational data display item of the hydraulic excavator 1. The first machine selection area 50 and the second machine selection area 52 work in coordination with each other. When the model number, serial number, and operational data display item of the hydraulic excavator 1 are selected and displayed in one of the two machine selection areas 50 and 52, the same is also selected and displayed in the other area. The status bar 55 concisely displays the model number, serial number, and operational data display item of the hydraulic excavator 1, selected in the first machine selection area 50 or the second machine selection area 52.

Next, a screen displayed when "Events", "Hours (Chronological)", or "Hours (Scatter diagram)" is selected as the operational data display item in the first machine selection area 50 or the second machine selection area 52, is described below.
(1) Chronological data display of event information (more specifically, alarm/trouble occurrence information, engine on/off information, and key switch on/off information)

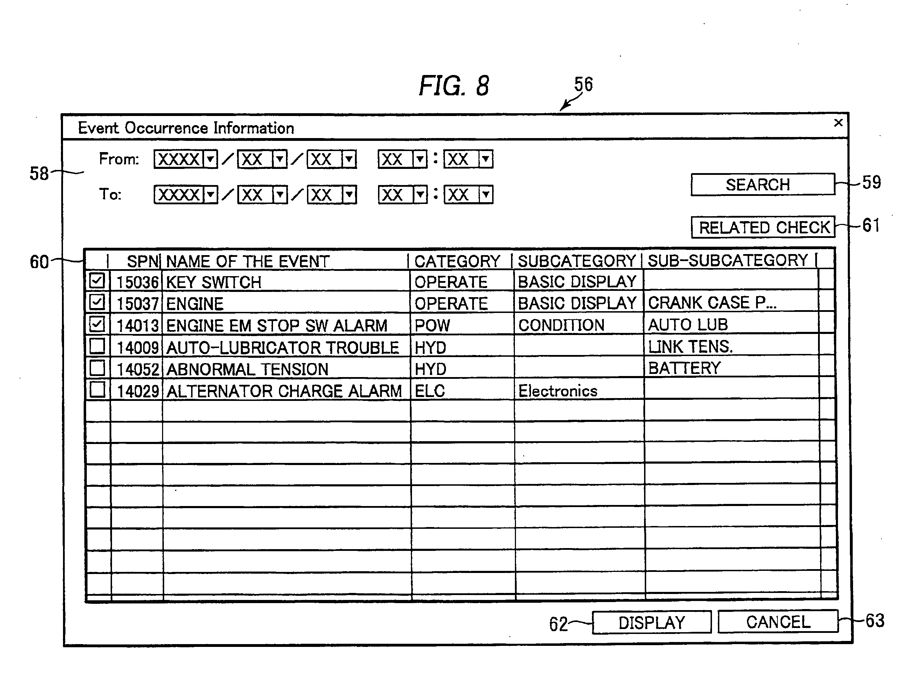

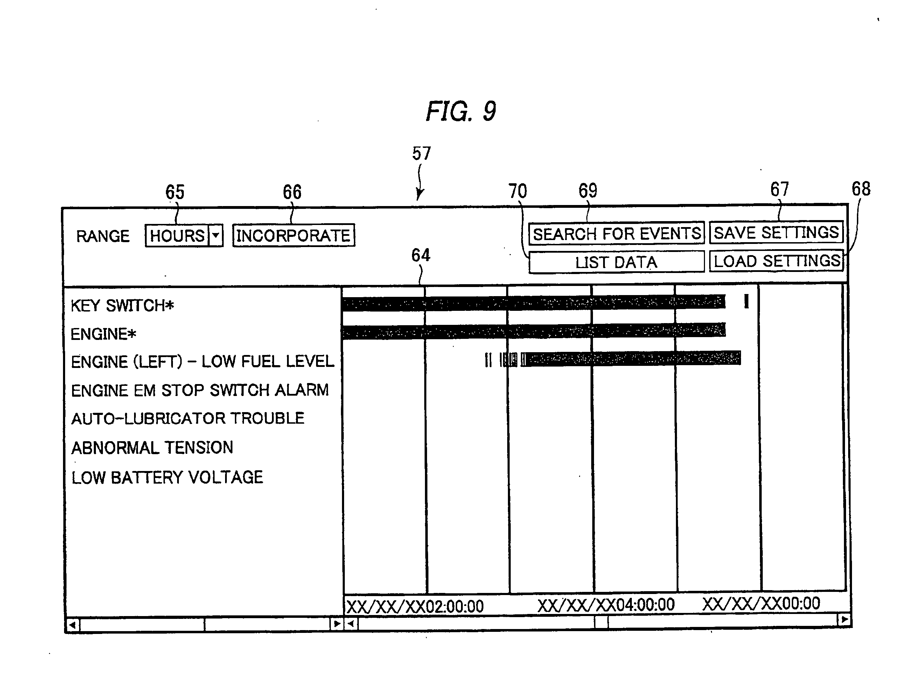

When the operator selects "Events" in the first machine selection area 50 or the second machine selection area 52, such an event occurrence information screen 56 as shown in Fig. 8 initially appears. When "Events" is selected the second time or onward (in other words, after entry of display setup on the event occurrence information screen 56), the event occurrence information screen 56 is skipped and then as shown in Fig. 9, a chronological event information display screen 57 (to be described later) is displayed in the operational data display area 51.

The event occurrence information screen 56 has an event period entry field 58, a 'Search' button 59, an event item listing area 60, a 'Related Check' button 61, a 'Display' button 62, and a 'Cancel' button 63.

The event period entry field 58 enables the starting and ending time of the day of a relevant event occurrence period to be entered in the pull-down menu format. In the present embodiment, the event occurrence period is limited to a maximum of one week. If the entered period is overstepped, a precautionary message screen (not shown) will appear. When the operator selects the 'Search' button 59 by moving the cursor thereto with the mouse 4C and clicking thereupon (hereinafter, button selection mean such operations), the CPU 4c accesses the data stored in the data-saving area 4eb of the saving device 4e and searches for the event information obtained during the event occurrence period entered in the event period entry field 58, the event information relating to the model number and serial number of the hydraulic excavator 1 that were selected in the first machine selection area 50 or the second machine selection area 52. After this, the CPU 4c displays items of the event information (hereinafter, these items are referred to as the event items), which has been extracted by the search, in list form in the event item listing area 60 (item list display means). Various event information is classified in advance according to intended region or section, attribute or property, or the like. In the event item listing area 60, a name of the event is displayed with the classification (in Fig. 8, "Major category", "Subcategory", and "Sub-subcategory") and an identification number (in Fig. 8, "SPN").

In addition, a check field is provided to the left of each event item displayed in the event item listing area 60, and when any one of the event items in the event item listing area 60 is selected by the operator, a tick (check mark) is assigned to the check field of the selected event item (first alarm/trouble occurrence information selection means). Reselection of the ticked event item by the operator clears the tick of the event item. Since the data relating to all hydraulic excavators 1 contains engine on/off information and key switch on/off information, "Engine" and "Key Switch" as event items are usually displayed in the event item listing area 60. Additionally, the check fields of the two event items "Engine" and "Key Switch" are ticked automatically (these ticks cannot be removed).

When the 'Related Check' button 61 is selected by the operator with a tick assigned to at least one event item other than "Engine" and "Key Switch" (in other words, at least one item of alarm/trouble occurrence information, hereinafter, this item is referred to as the alarm/trouble item) in the event item listing area 60, the CPU 4c searches for alarm/trouble items with which the probable causes (e.g., the intended region or section, system, attribute or property, or the like) of the alarm/trouble events are likely to have some association in regard to the ticked alarm/trouble item. After this, the CPU 4c ticks the alarm/trouble items extracted by the search (second alarm/trouble occurrence information selection means).

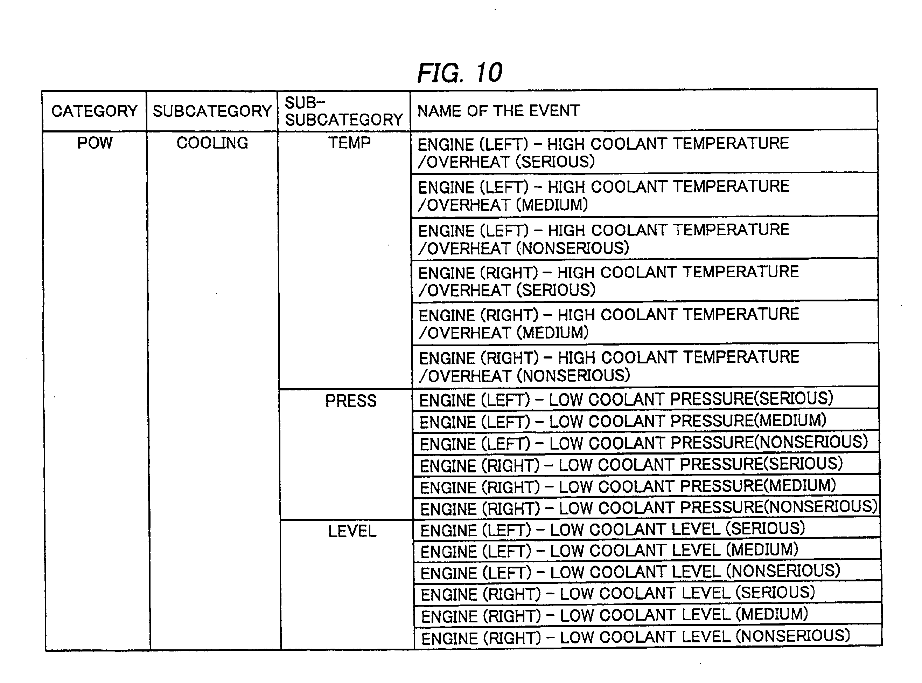

This is described in further detail. A plurality of combinations of the alarm/trouble events, which are likely to have some association with the probable causes, are stored in the program-saving area 4ea of the saving device 4e beforehand. A more specific example is shown in Fig. 10, in which, "Engine Coolant Temperature (Overheat)", "Low Engine Coolant Pressure", and "Low Engine Coolant Level" are stored as a combination of the alarm/trouble events which are likely to have association with the probable causes. The present embodiment envisages a large hydraulic excavator equipped with two engines, so the alarm/trouble events corresponding to "Engine (Left)" and "Engine (Right)" exist as shown in Fig. 10. In addition, the alarm/trouble events shown in Fig. 10 is divided into "Serious", "Medium", or "Nonserious" categories, according to a particular threshold level for determining whether an alarm or trouble has occurred. The CPU 4c searches the alarm/trouble items displayed in the event item listing area 60, on the basis of the combination data prestored in the program-saving area 4ea of the saving device 4e. More specifically, for example, if the operator selects the 'Related Check' button 61 with one of the two alarm/trouble items "Engine (Left) - High Coolant Temperature/Overheat (Nonserious)" and "Engine (Left) - Low Coolant Pressure (Nonserious)" ticked in the event item listing area 60, a tick will also be assigned to the other alarm/trouble item. In the present embodiment, the number of ticks is limited to a maximum of nearly 10, for example, and if this number is exceeded, a precautionary message screen (not shown) will appear.

When the operator next selects the 'Display' button 62, the event occurrence information screen 56 is closed and the chronological event information display screen 57 is displayed in the operational data display area 51.

The chronological event information display screen 57 includes a graph display area 64, which, in the relevant period entered in the event period entry field 58 of the event occurrence information screen 56 (the relevant period is the period that has been determined by operating the 'Search' button 59), shows in graphical form the chronological data relating to the event information ticked in the event item listing area 60. The chronological event information display screen 57 shown in Fig. 9 is an example in which "Engine", "Key Switch", "Engine (Left) - Low Fuel Level", "Engine EM Stop SW Alarm" (engine emergency stopping switch alarm), "Auto-Lubricator Trouble", "Abnormal Tension", and "Low Battery Voltage" are ticked in the event item listing area 60 of the event occurrence information screen 56. In the graph display area 64, event names are listed in a vertical direction and the occurrence dates and time of the day of each event are listed in a horizontal direction, with occurrence time zones of event information being displayed in color-coded band form. This display enables the operator to confirm the occurrence time zones of multiple alarm/trouble events while confirming the on/off state of the engine and that of the key switch. The operator can therefore ascertain chronological order of the occurrence time zones of multiple alarms/trouble events and easily judge for interrelations between the respective probable causes.

The chronological event information display screen 57 has a range entry field 65, an 'Incorporate' button 66, a 'Save Settings' button 67, a 'Load Settings' button 68, a 'Search for Events' button 69, and a 'List Data' button 70.

The range entry field 65 enables the operator to select, for example, either "Hours" (Hourly), "Minutes" (every 10 minutes), or "Seconds" (every 10 seconds), in a pull-down menu format. When the operator selects the 'Incorporate' button 66, a time interval (interval between vertical lines) of the graph in the graph display area 64 is switched to be the time unit selected in the range entry field 65.

When the operator selects the 'Save Settings' button 67, a setup file for chronological display of event information is created and saved in the saving device 4e. More specifically, this file includes the model number and serial number of the hydraulic excavator 1 selected in the first machine selection area 50 or the second machine selection area 52, the relevant period entered in the relevant period entry field 58 of the event occurrence information screen 56, and the event item selected in the event item listing area 60 of the event occurrence information screen. When the operator selects the 'Load Settings' button 68, the setup file for chronological display of event information, saved in the saving device 4e, is loaded and set up. In accordance with this file, data that has been stored into the data-saving area 4eb of the saving device 4e is searched and then chronological data on the corresponding event information is displayed in the graph display area 64. At this time, the corresponding model number and serial number of the hydraulic excavator 1 also is displayed in the first machine selection area 50 and the second machine selection area 52.

When the operator selects the 'Search for Events' button 69, the event occurrence information screen 56 appears. When the operator selects the 'Cancel' button 63 on the event occurrence information screen 56, the screen 56 is closed.

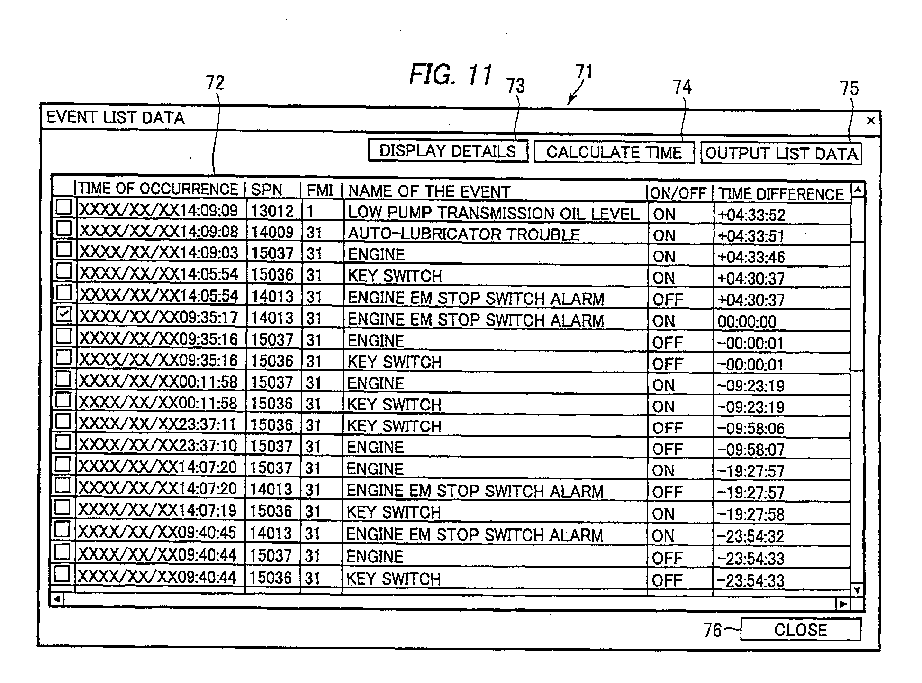

When the operator selects the 'List Data' button 70, such an event information listing screen 71 as shown in Fig. 11 appears. The event information listing screen 71 has a listing area 72 to display a list of chronological data on the event information displayed on the chronological event information display screen 57. The names of events, the event identification numbers (in Fig. 11, "SPN" and "FMI"), the event on/off states, and the occurrence time of the day of each event (more specifically, the starting and ending time of occurrence of the alarm or trouble, the switching time of engine on/off, and the switching time of key switch on/off) are displayed in the listing area 72.

In addition, a check field is provided to the left of each event occurrence time display field in the listing area 72, and when any one of the event occurrence time values in the listing area 72 is selected by the operator, a tick (check mark) is assigned to the check field of the selected event occurrence time. Reselection of the ticked event occurrence time by the operator clears the tick thereof. When event occurrence time different from the ticked one is selected by the operator, the tick of the latter will be cleared and a tick will be assigned to the former.

The event information listing screen 71 has a 'Display Details' button 73, a 'Calculate Time' button 74, an 'Output List Data' button 75, and a 'Close' button 76.

If the operator selects the 'Display Details' button 73 with a tick assigned to one of the event occurrence time values listed in the listing area 72, a detailed information screen will appear. The detailed information screen, although not shown, displays the name of the event, a description of the event, a description of related phenomena, and other information. If the operator selects the 'Calculate Time' button 74 with a tick assigned to one of the event occurrence time values listed in the listing area 72, the CPU 4c will compute differences in time with respect to other event occurrence time values, based on the ticked event occurrence time, and list these time differences in the listing area 72. In the present embodiment, time differences less than one day are listed in units of seconds, whereas time differences equal to and greater than one day are all listed as "1 day or more".

If the operator selects the 'Output List Data' button 75, a file of the list data displayed in the listing area 72 will be created in a "csv" format, for example, and saved in the saving device 4e. This file includes the information selected in the first machine selection area 50 or the second machine selection area 52, that is, the model number and serial number of the hydraulic excavator 1 and the operational data display item "Events". If the operator selects the 'Close' button 76, the event information listing screen 71 will be closed.

### (2) Chronological data display of operational-state physical quantities

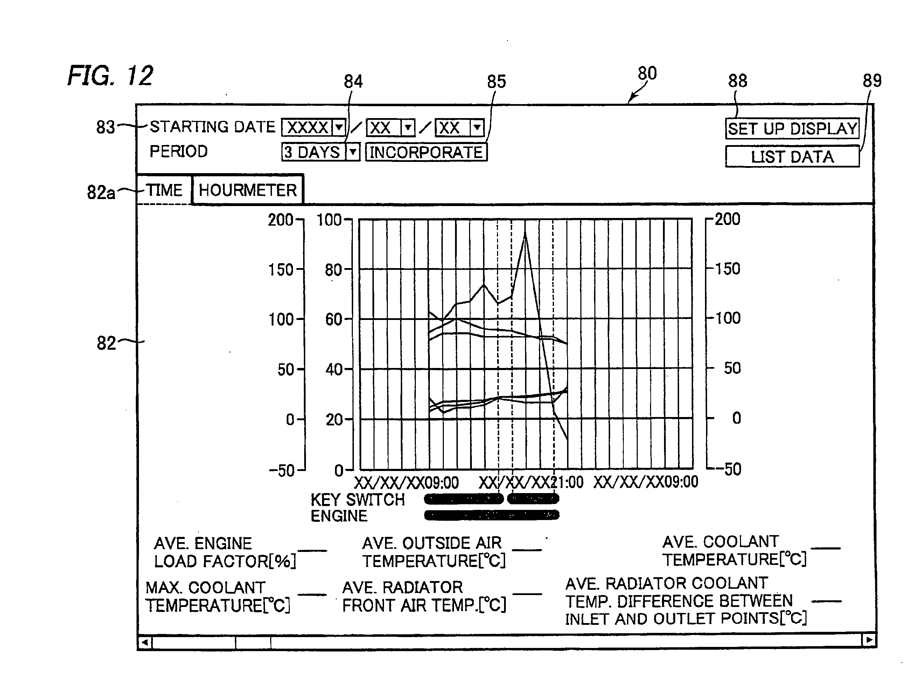

When any one of the alarms or trouble events displayed in the graph display area 64 of the chronological event information display screen 57, and the occurrence time of the day of that alarm or trouble event are selected (more specifically, by moving the cursor to the band- or bar-like section which indicates the occurrence time zone of the event information with the mouse, and clicking thereon), the operational data display area 51 is switched from the screen 57 to a chronological operational-state physical quantities display screen 80 (see Fig. 12). At this time, "Hours (Chronological)" is automatically selected and displayed in the first machine selection area 50 and the second machine selection area 52.

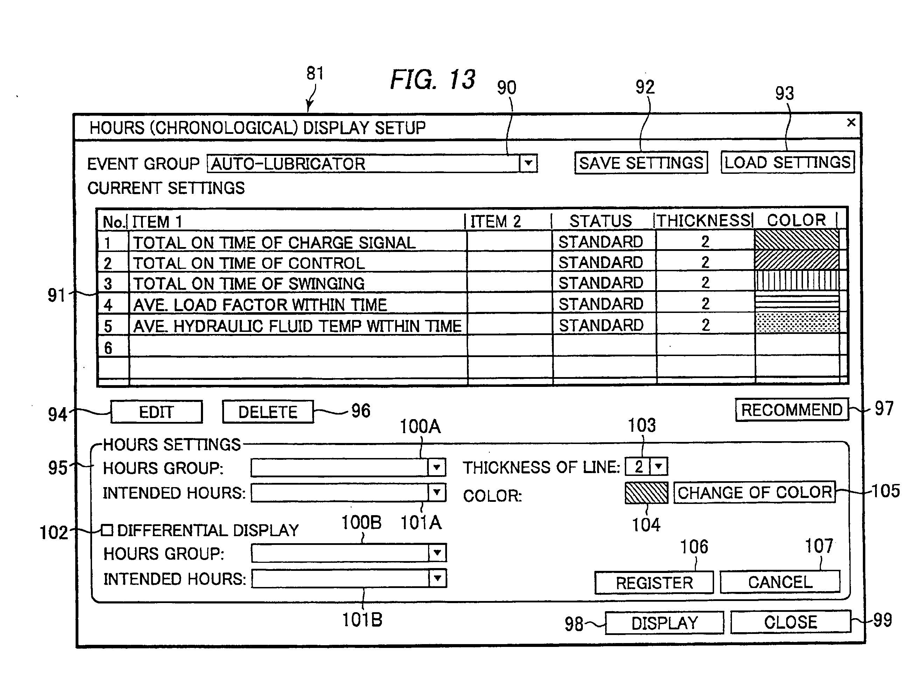

After the chronological operational-state physical quantities display screen 80 has been displayed, if "Events" is selected in either the first machine selection area 50 or the second machine selection area 52 by the operator, the chronological event information display screen 57 will appear once again in the operational data display area 51. After this, if "Hours (Chronological)" is selected in either the first machine selection area 50 or the second machine selection area 52 by the operator, the chronological operational-state physical quantities display screen 80 will appear once again in the operational data display area 51. Selecting the chronological event information display screen 57 or the chronological operational-state physical quantities display screen 80 in this way enables the operator to confirm data again. If the operator selects "Hours (Chronological)" in either the first machine selection area 50 and the second machine selection area 52 without the chronological operational-state physical quantities display screen 80 ever displayed after the start of the diagnostic information display program, such a chronological display setup screen 81 (to be described later) as shown in Fig. 13 will appear.

After switching from the chronological event information display screen 57 to the chronological operational-state physical quantities display screen 80, chronological data on the operational-state physical quantities, related as useful information for cause checking of the alarm/trouble occurrence information selected in the graph display area 64, is showed in graphical form in a graph display area 82 of the chronological operational-state physical quantities display screen 80. This chronological data on the operational-state physical quantities is displayed in a period (for example, one week) that is set around the occurrence time selected in the graph display area 64 of the chronological event information display screen 57.

This is described in further detail below. Combinations of alarm/trouble occurrence information and the relevant operational-state physical quantities as the useful information for cause checking of the alarm/trouble occurrence information are stored beforehand in the program-saving area 4ea of the saving device 4e. In accordance with this combination data prestored in the program-saving area 4ea of the saving device 4e, the CPU 4c extracts, from the data stored in the data-saving area 4eb of the saving device 4e, the operational-state physical quantities relating to the alarm/trouble occurrence information selected in the graph display area 64 of the chronological event information display screen 57. After this, the CPU 4c displays the extracted chronological data in the graph display area 82 of the chronological operational-state physical quantities display screen 80. The chronological operational-state physical quantities display screen 80 shown in Fig. 12 applies when "Engine (Left) - High Coolant Temperature/Overheat (Nonserious)" is selected as the alarm/trouble occurrence information in the graph display area 64 of the chronological event information display screen 57. In the graph display area 82 of the chronological operational-state physical quantities display screen 80 shown in Fig. 12, the chronological data of the relevant operational-state physical quantities "Ave. engine load factor", "Ave. outside air temperature", "Ave. coolant temperature", "Max. coolant temperature", "Ave. radiator front air temp.", and "Ave. radiator coolant temp. difference between inlet and outlet points" (= "Ave. radiator inlet coolant temp." - "Ave. radiator outlet coolant temp.") is displayed.

The graph display area 82 has a tab 82a that enables the operator to select either a TIME display mode or a HOUR METER display mode. The TIME display mode is initially set as a default, in which case, time-varying changes in operational-state physical quantities (however, as described above, separate values for each predetermined cycle) are displayed in color-coded polygonal line graph form, with time of the day plotted on a horizontal axis and the operational-state physical quantities on a vertical axis. Time-varying changes in engine on/off information and key switch on/off information (in this case, however, determined from an on/off ratio for each predetermined cycle), are also displayed together. The probable causes of alarms or trouble can thus be checked easily.

In the TIME display mode, the chronological operational-state physical quantities display screen 80 has a starting date entry field 83, a period entry field 84, and an 'Incorporate' button 85. The starting date entry field 83 enables a starting date displayed under the horizontal axis of the graph display area 82 to be changed in a pull-down menu format. For example, a starting date of the period is displayed as a default so that the occurrence time selected in the graph display area 64 of the chronological event information display screen 57 is a middle of the period. The period entry field 84 enables, for example, either "3 days", "1 week" as a default, "1 month", "1 year", or "3 years" to be selected in a pull-down menu format as a time range displayed under the horizontal axis of the graph display area 82. When the operator selects the 'Incorporate' button 85, the graph horizontal axis displayed in the graph display area 82 is switched to represent the starting date entered in the starting date entry field 83 and the time range entered in the period entry field 84.

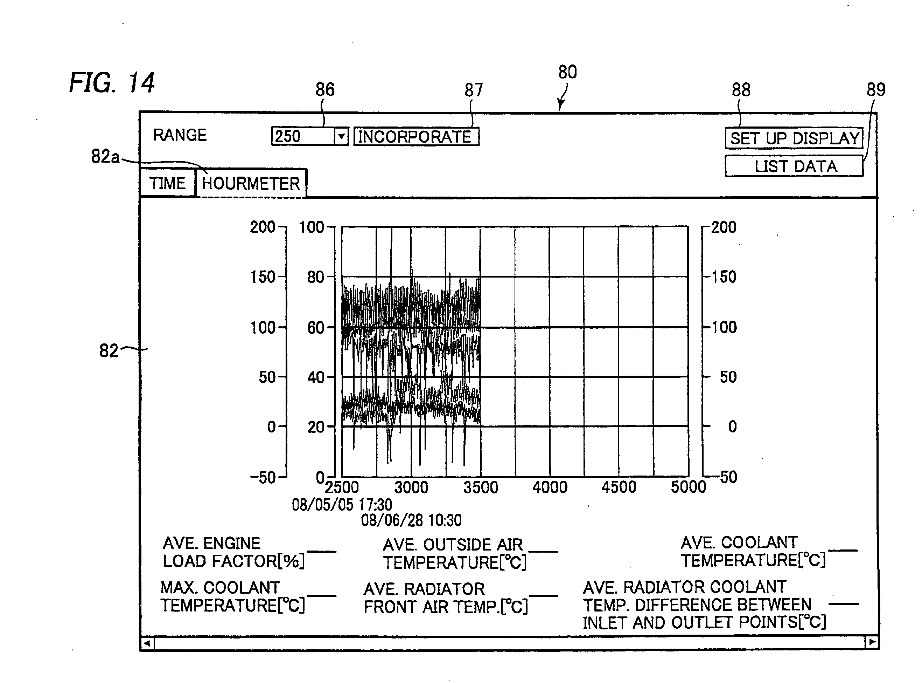

When the HOUR METER display mode is selected, the graph display area 82 displays the time-varying changes in operational-state physical quantities in color-coded polygonal line graph form, with hour meter readings (cumulative engine operation time) plotted on a horizontal axis and the operational-state physical quantities on a vertical axis. The graph display area 82 at this time is shown in Fig. 14. In this case, the time-varying changes in engine on/off information and key switch on/off information are not displayed. The hour meter range displayed under the horizontal axis covers an entire period (more specifically, this period encompasses the range from initial operation of the hydraulic excavator 1 to the present), enabling a tendency over the entire period to be confirmed.

In the HOUR METER display mode, the chronological operational-state physical quantities display screen 80 has a range entry field 86 and an 'Incorporate' button 87. The range entry field 86 enables either "250", "500", or "1000" to be selected in a pull-down menu format. When the operator selects the 'Incorporate' button 87, a time interval (interval between vertical lines) of the graph displayed in the graph display area 82 is switched to be the hour meter unit selected in the range entry field 86.

The chronological operational-state physical quantities display screen 80 further has a 'Set Up Display' button 88 and a 'List Data' button 89 as buttons common to the TIME display mode and the HOUR METER display mode. When the operator selects the 'Set Up Display' button 88, the chronological display setup screen 81 appears (see Fig. 13).

The chronological display setup screen 81 has an alarm/trouble item entry field 90, a settings display area 91, a 'Save Settings' button 92, a 'Load Settings' button 93, an 'Edit' button 94, an edit area 95, a 'Delete' button 96, a 'Recommend' button 97, a 'Display' button 98, and a 'Close' button 99.

The alarm/trouble item entry field 90 enables items of alarm/trouble occurrence information to be selected in a pull-down menu format. These items, contained in the data stored in the data-saving area 4eb of the saving device 4, relate to the model number and serial number of the hydraulic excavator 1 that were selected in the first machine selection area 50 or the second machine selection area 52. In the settings display area 91, items of the relevant operational-state physical quantities as the useful information for cause checking of the alarm or trouble selected in the alarm/trouble item entry field 90 (in other words, items of the operational-state physical quantities to be displayed on the chronological operational-state physical quantities display screen 80) are displayed together with the display settings (thickness of lines and color) on the chronological event information display screen 57.

When the chronological display setup screen 81 is displayed by the selection of the 'Set Up Display' button 88 on the chronological operational-state physical quantities display screen 80, the alarm/trouble item entry field 90 indicates, as a default, for example, the item of the alarm/trouble occurrence information selected in the graph display area 64 of the chronological event information display screen 57 (in other words, the item of the alarm/trouble occurrence information relating the operational-state physical quantities displayed in the graph display area 82 of the chronological operational-state physical quantities display screen 80). The settings display area 91 indicates items of the operational-state physical quantities displayed in the graph display area 82 of the chronological operational-state physical quantities display screen 80. The chronological display setup screen 81 shown in Fig. 13 is an example in which "Auto-Lubricator Trouble" is selected as the alarm/trouble item in the alarm/trouble item entry field 90. In the settings display area 91 shown in Fig. 12, "Total ON time of charge signal", "Total ON time of control", "Total ON time of swinging", "Ave. load factor within time", and "Ave. hydraulic fluid temp. within time" are displayed as the items of the operational-state physical quantities related as the useful information for cause checking of the "Auto-Lubricator Trouble".

When the operator selects the 'Save Settings' button 92, a setup file for chronological display of operational-state physical quantities is created and saved in the saving device 4e. More specifically, this file includes the model number and serial number of the hydraulic excavator 1 selected in the first machine selection area 50 or the second machine selection area 52, the starting date entered in the starting date entry field 83 of the chronological operational-state physical quantities display screen 80, the time range entered in the period entry field 84 of the screen 80, the alarm/trouble item entered in the alarm/trouble item entry field 90, and the items of the operational-state physical quantities displayed in the settings display area 91. When the operator selects the 'Load Settings' button 93, the setup file for chronological display of operational-state physical quantities, saved in the saving device 4e, is loaded and set up. In accordance with this file, data that has been stored into the data-saving area 4eb of the saving device 4e is searched, and then the corresponding alarm/trouble item is displayed in the alarm/trouble item entry field 90, the items of the corresponding operational-state physical quantities are displayed in the settings display area 91. At this time, the corresponding model number and serial number of the hydraulic excavator 1 also is displayed in the first machine selection area 50 and the second machine selection area 52.

When the operator selects the 'Edit' button 94 with any one of operational-state physical quantity items or a blank space selected in the settings display area 91 to change the selected item or add an item, entry in the edit area 95 become effective.

The edit area 95 has an operational-state physical quantities classification field 100A and an operational-state physical quantities entry field 101A in order to enable an operational-state physical quantity to be entered in a first item field of the settings display area 91. Each operational-state physical quantity is classified in advance according to the intended section or region, attribute or property, and/or the like. The operational-state physical quantities classification field 100A enables the classification to be selected in a pull-down menu format. The operational-state physical quantities entry field 101A presents a list of the operational-state physical quantities relating to the classification selected in the classification selection field 100A, and enables one of the physical quantities to be selected.

The edit area 95 also has a differential display check field 102 to provide for setup of differential display of operational-state physical quantities (more specifically, display of any differential between the operational-state physical quantity entered in the first item field of the settings display area 91, and an operational-state physical quantity entered in a second item field of the settings display area 91). When a differential display check field 102 is selected by the operator, a tick is assigned to the differential display check field 102. At the same time, an operational-state physical quantities classification selection field 100B and operational-state physical quantities entry field 101B become effective. The operational-state physical quantities entry field 100B and operational-state physical quantities entry field 101B have functions equivalent to those of operational-state physical quantities selection field 100A and operational-state physical quantities entry field 101A, and enable entry of an operational-state physical quantity in the second item field of the settings display area 91. When the operator reselects the differential display check field 102, the tick is cleared therefrom, the operational-state physical quantities classification selection field 100B and operational-state physical quantities entry field 101B become ineffective.

The edit area 95 further includes a line thickness entry field 103, a color display field 104, a color change field 105, a 'Register' button 106, and a 'Cancel' button 107. The line thickness entry field 103 enables the operator to enter, in a pull-down menu format, thickness of lines for display on the chronological event information display screen 57. When the operator selects the color change field 105, a color palette screen (not shown), for example, appears to indicate that a color of the lines for display on the chronological event information display screen 57 can be entered. The entered color is displayed in the color display field 104. When the operator selects the 'Register' button 106, information that has been entered in the edit area 95 is registered in the settings display area 91. In addition, a data on combination between the alarm/trouble item entered in the alarm/trouble entry field 90 and the operational-state physical quantities displayed in the settings display area 91 is updated. If the operator instead selects the 'Cancel' button 107, the information entered in the edit area 95 will be canceled.

If the operator selects the 'Delete' button 96 with any one of operational-state physical quantity items selected in the settings display area 91, the selected operational-state physical quantity item will be deleted and the combination data will be updated. If the operator selects the 'Recommend' button 97, an operational-state physical quantity item recommended by the manufacturer will be displayed in the settings display area 91 and the combination data will be updated.

When the operator selects the 'Display' button 98, the chronological display setup screen 81 is closed and chronological data on the operational-state physical quantities displayed in the settings display area 91 is displayed in the chronological operational-state physical quantities display screen 80. If the operator selects the 'Close' button 99, the chronological display setup screen 81 will be closed.

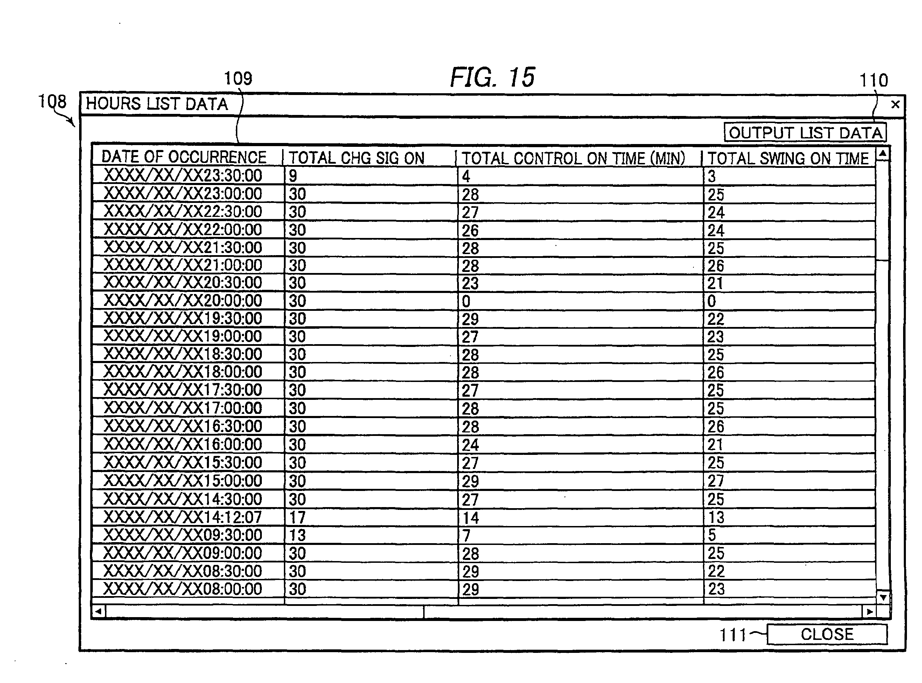

Referring back to Fig. 12, if the operator selects the 'List Data' button 89 with the TIME display mode selected, such an operational-state physical quantities listing screen 108 as shown in Fig. 15 will appear.

The operational-state physical quantities listing screen 108 has a listing area 109 to display a list of chronological data (separate data for each predetermined cycle, and acquisition time of the data) on the operational-state physical quantities displayed on the chronological operational-state physical quantities display screen 80. In the listing area 109 of the operational-state physical quantities listing screen 108 shown in Fig. 15, "Total ON time of charge signal", "Total ON time of control", and "Total ON time of swinging" as the operational-state physical quantities are displayed.

The operational-state physical quantities listing screen 108 also has an 'Output List Data' button 110 and a 'Close' button 111. If the operator selects the 'Output List Data' button 110, a file of the list data displayed in the listing area 109 will be created in the "csv" format, for example, and saved in the saving device 4e. This file includes the information selected in the first machine selection area 50 or the second machine selection area 52, that is, the model number, serial number, and operational data display item "Hours (Chronological)" of the hydraulic excavator 1. If the operator selects the 'Close' button 111, the operational-state physical quantities listing screen 108 will be closed.

Referring back to Fig. 14, if the operator selects the 'List Data' button 89 with the HOUR METER display mode selected, an operational-state physical quantities listing screen will also appear. This operational-state physical quantities listing screen, although not shown, is of substantially the same composition as that of the operational-state physical quantities listing screen 108, except that instead of the data acquisition time, the cumulative engine operation time will be displayed in a listing area.

### (3) Display of operational-state physical quantities in the form of a scatter diagram

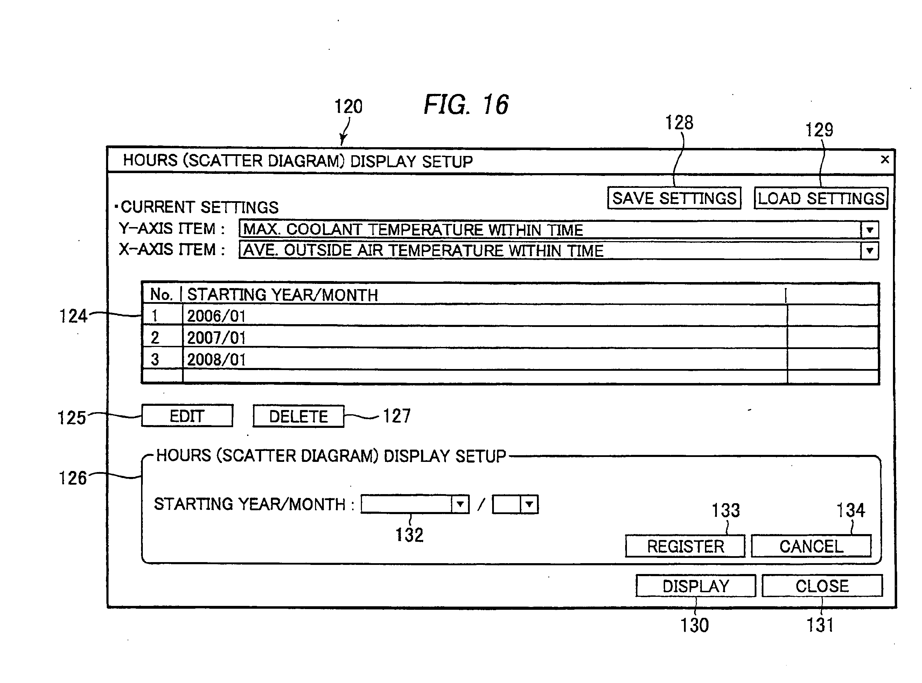

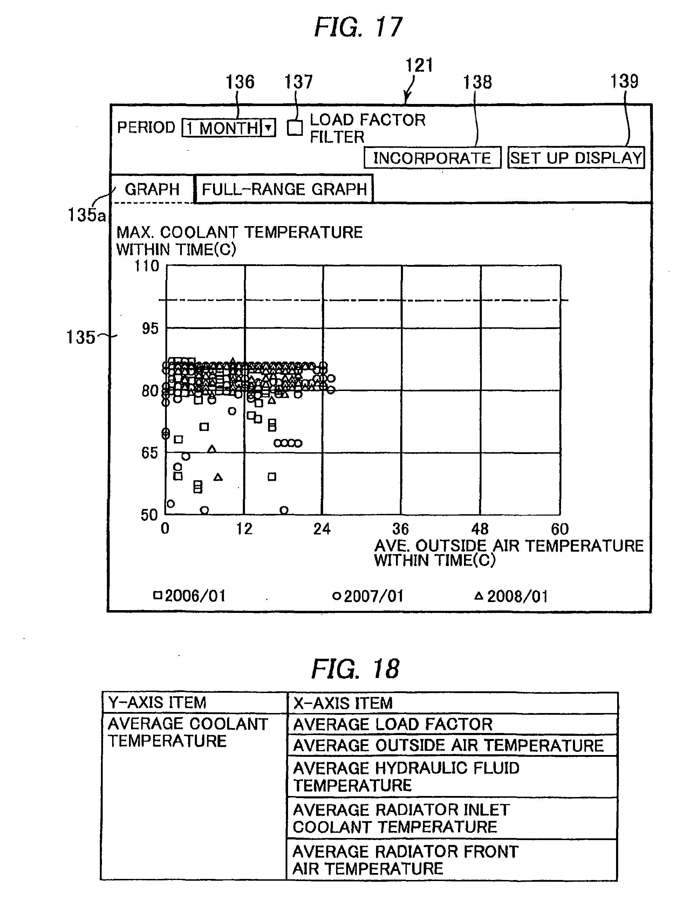

When the operator selects "Hours (Scatter diagram)" in the first machine selection area 50 or the second machine selection area 52, such a scatter diagram display setup screen 120 as shown in Fig. 16 initially appears. When "Hours (Scatter diagram)" is selected the second time or onward (in other words, after entry of display setup on the scatter diagram display setup screen 120), the scatter diagram display setup screen 120 is skipped and then as shown in Fig. 17, an operational-state physical quantities scatter diagram display screen 121 (to be described later) is displayed in the operational data display area 51.

The scatter diagram display setup screen 120 has a Y-axis item entry field 122, and X-axis item entry field 123, a settings display area 124, an 'Edit' button 125, an edit area 126, a 'Delete' button 127, a 'Save Settings' button 128, a 'Load Settings' button 129, a 'Display' button 130, and a 'Close' button 131.

The Y-axis item entry field 122 enables an operational-state physical quantity to be entered in a pull-down menu format. The X-axis item entry field 123 presents a list of operational-state physical quantities relating to the operational-state physical quantity item entered in the Y-axis item entry field 122, and enables one of the physical quantities to be selected. As more specific example shown in Fig. 18, if "Ave. coolant temperature" is entered in the Y-axis item entry field 122, the X-axis item entry field 123 will present a list of "Ave. load factor", "Ave. outside air temp.", "Ave. hydraulic fluid temp.", "Ave. radiator inlet water temp.", and "Ave. radiator front air temp.", and enable one of these items to be selected.

In the settings display area 124, a starting date in the intended period is displayed as legend setup information. When the operator selects the 'Edit' button 125 with any one of legend items in the settings display area 124 or a blank space selected in the settings display area 124 to change the selected item or add an item, entry in the edit area 126 become effective.

The edit area 126 includes a starting date entry field 132, a 'Register' button 133, and a 'Cancel' button 134. The starting date entry field 132 enables the starting date in the intended period to be entered in a pull-down menu format. When the operator selects the 'Register' button 133, the starting date that has been entered in the starting date entry field 132 is registered in the settings display area 124. If the operator instead selects the 'Cancel' button 134, the starting date entered in the starting date entry field 132 will be canceled.

If the operator selects the 'Delete' button 127 with any one of the legend items selected in the settings display area 124, the selected item will be deleted. when the operator selects the 'Save Settings' button 128, a setup file for scatter diagram display of operational-state physical quantities is created and then saved in the saving device 4e. This file includes the model number and serial number of the hydraulic excavator 1, selected in the first machine selection area 50 or the second machine selection area 52, the operational-state physical quantity items entered in the Y-axis item entry field 122 and the X-axis item entry field 123, and the starting date displayed as legend setup information in the settings display area 124, and either the period entered in the operational-state physical quantities scatter diagram display screen 121 (to be described later) or a default setting of the period. when the operator selects the 'Load Settings' button 129, the setup file for scatter diagram display of operational-state physical quantities, saved in the saving device 4e, is loaded and set up. In accordance with this file, data that has been stored into the data-saving area 4eb of the saving device 4e is searched for and then the corresponding operational-state physical quantities are displayed in the Y-axis item entry field 122 and the X-axis item entry field 123. In addition, the starting date is displayed as the corresponding legend setup information, in the settings display area 124. At this time, the corresponding model number and serial number of the hydraulic excavator 1 is further displayed in the first machine selection area 50 and the second machine selection area 52.

When the operator selects the 'Display' button 130, the scatter diagram display setup screen 120 is closed and the operational-state physical quantities scatter diagram display screen 121 is displayed in the operational data display area 51 (see Fig. 16). If the operator selects the 'Close' button 131, the scatter diagram display setup screen 120 will only be closed.

The operational-state physical quantities scatter diagram display screen 121 includes a graph display area 135 that presents a scatter diagram. In the scatter diagram, changes in the operational-state physical quantity (in Fig. 16, "Max. coolant temperature within time") entered in the Y-axis item entry field 122 of the scatter diagram display setup screen 120 are plotted as Y-coordinates, and changes in the operational-state physical quantity (in Fig. 16, "Ave. outside air temp. within time") entered in the X-axis item entry field 123 are plotted as X-coordinates. That is, the CPU 4c extracts, from the data stored in the data-saving area 4eb of the saving device 4e, operational-state physical quantities in the starting date and period (e.g., 1 month as its default) as the legend setup information displayed in the settings display area 124 of the scatter diagram display setup screen 120, and displays the extracted data in the graph display area 135 (the legend is displayed with a color code). For an operational-state physical quantity (in Fig. 16, "Max. coolant temperature within time") that a threshold level for discriminating the occurrence of an alarm or trouble is set up , the threshold level (shown with a single-dotted line in the figure) is also displayed as referential information. The CPU 4c also computes a centroid point of the data (i.e., an average value of the X-coordinates and that of the Y-coordinates) in the same intended period (legend), and displays the computed centroid point in conspicuous form in the graph display area 135 (in Fig. 16, however, the centroid point is not shown for convenience' sake). Thus, a correlation between the two operational-state physical quantities, and changes in the correlation can be confirmed.

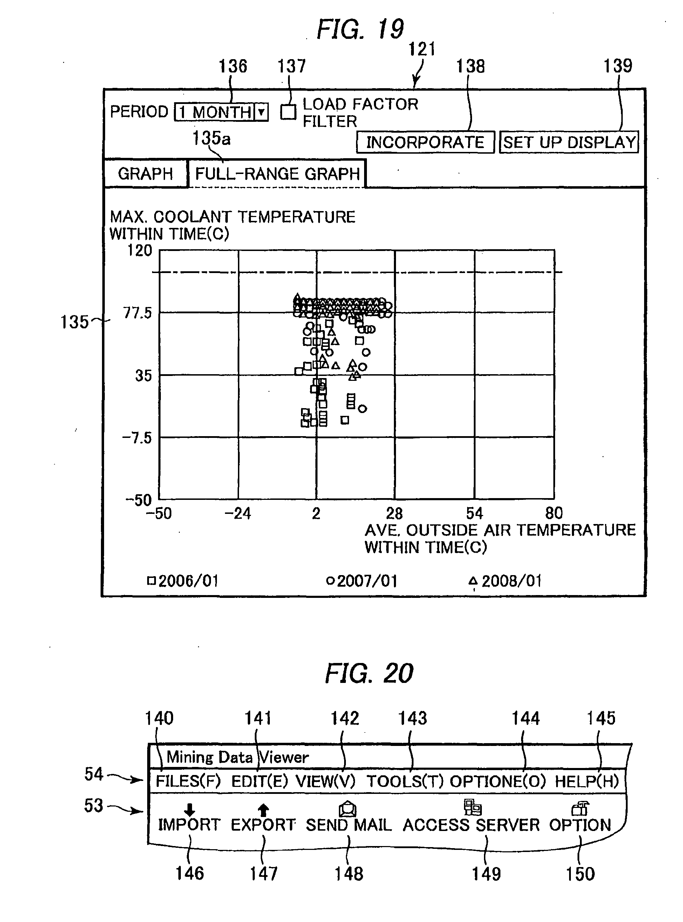

The graph display area 135 has a tab 135a that enable the operator to select either a GRAPH display mode or a FULL-RANGE GRAPH display mode. The GRAPH display mode is initially set as a default, in which case, ranges of the horizontal axis and the vertical axis are displayed in reduced form automatically for the plotted data to be focused (more specifically, so as to obtain previously set ranges or the ranges of the plotted data). If the FULL-RANGE GRAPH display mode is selected instead, the ranges of the horizontal axis and the vertical axis will be displayed for each to maximize (i.e., maximum obtainable operational-state physical quantity ranges), as shown in Fig. 19.

The operational-state physical quantities scatter diagram display screen 121 has a period entry field 136, a load factor filter checking field 137, an 'Incorporate' button 138, and a 'Set Up Display' button 139. When the operator selects the 'Set Up Display' button 139, the scatter diagram display setup screen 120 appears.

The period entry field 136 enables, for example, either "1 month" as a default, "2 months", "3 months", "6 months", or "12 months" to be selected in a pull-down menu format. When the operator selects the 'Incorporate' button 138, operational-state physical quantities in a period entered in the period entry field 136 are extracted from the data stored in the data-saving area 4eb of the saving device 4e, and the extracted data is displayed in the graph display area 135.

When the operator selects the load factor filter checking field 137, a tick is assigned thereto, and later reselection of the load factor filter checking field 137 will clear the tick. After the load factor filter checking field 137 has been assigned the tick, when the operator selects the 'Incorporate' button 138, the CPU 4c extracts operational-state physical quantities acquired at an engine load factor of, for example, 30% or more, and then display the extracted data in the graph display area 135.

### (4) Miscellaneous

Fig. 19 is a diagram for explaining the configurations of the menu bar 54 and toolbar 53.

Referring to Figs. 19 and 7, the menu bar 54 has a 'Files' button 140, an 'Edit' button 141, a 'Display' button 142, a 'Tools' button 143, an 'Options' button 144, and a 'Help' button 145.

Upon the 'Files' button 140 being selected by the operator, a 'Create Windows' button, an 'Import' button, an 'Export' button, a 'Send Mail' button, and an 'End' button are listed in a pull-down menu format, even though these buttons are not shown. Operator selection of the 'Create Windows' button starts the diagnostic information display program anew, adding a screen (see Fig. 7). This enables chronological data on machines of different serial numbers to be displayed on a plurality of screens and thus to be analyzed on a comparative basis. Operator selection of the 'Export' button creates a data file corresponding to the diagnostic information display program and saves the data file in the saving device 4e. More specifically, the data file enables selection of, for example, either "latest 1 week", "latest 1 month", "Latest half year", "latest 1 year", or "Entire period", and contains operational data equivalent to the selected period. Operator selection of the 'Import' button loads the data file saved in the saving device 4e.

For example, if the 'Send Mail' button is selected with "Events" selected in the first machine selection area 50 or the second machine selection area 52, the setup file for chronological display of event information will be created and electronic mail with this setup file attached thereto will be created. For example, if the 'Send Mail' button is selected with "Hours (Chronological)" selected in the first machine selection area 50 or the second machine selection area 52, the setup file for chronological display of operational-state physical quantities will be created and electronic mail with this setup file attached thereto will be created. For example, if the 'Send Mail' button is selected with "Hours (Scatter diagram)" selected in the first machine selection area 50 or the second machine selection area 52, the setup file for scatter diagram display of operational-state physical quantities will be created and electronic mail with this setup file attached thereto will be created. Thus, these display setup files can be transmitted to other user-side personal computers 4, the main server 5, the intermediate server 6, or the like, so that the other user-side personal computers 4, the main server 5, the intermediate server 6, or the like can reproduce screen display. Operator selection of the 'End' button terminates the diagnostic information display program.

Upon the 'Edit' button 141 being selected by the operator, a 'Save Graphic Image' button is displayed in a pull-down menu format, although not shown. Upon the 'Save Graphic Image' button being selected by the operator, a 'Files' button and a 'Clipboard' button are displayed in a pull-down menu format, although not shown. Operator selection of the 'Files' button saves a currently open screen as an image in a file. Operator selection of the 'Clipboard' button temporarily saves the currently open screen as an image in a clipboard.

Upon the 'Display' button 142 being selected by the operator, a 'Toolbar' button, a 'Status bar' button, and a 'Model No. - Ser. No. Window' button, are displayed in a pull-down menu format, even though these buttons are not shown. Each time the operator selects the 'Toolbar' button, a tick at the left of the button alternates between 'show' (on) and 'hide' (off) states, and the toolbar 53 also alternates between 'show' and 'hide' states. Each time the operator selects the 'Status bar' button, a tick at the left of the button alternates between 'show' (on) and 'hide' (off) states, and the status bar 55 also alternates between 'show' and 'hide' states. Each time the operator selects the 'Model No. - Ser. No. Window' button, a tick at the left of the button alternates between 'show' (on) and 'hide' (off) states, and the first machine selection area 50 also alternates between 'show' and 'hide' states.

Upon the 'Tools' button 143 being selected by the operator, an 'Access Server' button, a 'Logout' button, a 'Register Ope. Data' button, and a 'Delete Ope. Data' button are listed in a pull-down menu format, even though these buttons are not shown. If the operator selects the 'Access Server' button without connection established between the user-side personal computer 4 and the communication line, a login screen (not shown) will appear. If the operator selects the 'Access Server' button with the user-side personal computer 4 connected to the communication line, a server options screen (not shown) will appear. The 'Logout' button is operative when the user-side personal computer 4 is connected to the communication line, and operator selection of the 'Logout' button disconnects the user-side personal computer 4 from the communication line.

Upon the 'Options' button 144 being selected by the operator, a 'Set Environment' button is displayed in a pull-down menu format, although not shown. Operator selection of the 'Set Environment' button displays an environmental setting screen (not shown) for the diagnostic information display program, enabling environmental parameters to be entered.

Upon the 'Help' button 145 being selected by the operator, a 'Help' button and a 'Version Info' button are displayed in a pull-down menu format, although not shown. Operator selection of the 'Help' button displays a help screen (not shown) for indicating help information in response to operator entry. Operator selection of the 'Version Info' button displays a version information screen (not shown) for the diagnostic information display program.

The 'Toolbar' 53 has an 'Import' button 146, an 'Export' button 147, a 'Send Mail' button 148, an 'Access Server' button 149, and an 'Options' button 150. The 'Import' button 146, the 'Export' button 147, and the 'Send Mail' button 148 have substantially the same functions as those of the 'Import' button, 'Export' button, and 'Send Mail' button displayed when the 'Files' button 140 of the menu bar 54 is selected. The 'Access Server' button 149 has substantially the same function as that of the 'Access Server' button displayed when the 'Tools' button 143 of the menu bar 54 is selected. The 'Options' button 150 has substantially the same function as that of the 'Set Environment' button displayed when the 'Options' button 144 of the menu bar 54 is selected.

Operation and operational effects of the present embodiment having the above configuration are described below. For example, in order to check the probable causes of alarms or trouble, the operator of the user-side personal computer 4 first displays, on the event occurrence information screen 56, the item list of the alarm/trouble occurrence information which has been acquired from the hydraulic excavator 1, and selects an alarm/trouble item to be checked. After this, when the related check button 61 is selected on the event occurrence information screen 56, other alarm/trouble items to which the probable causes are likely to have some association with respect to the selected alarm/trouble item will be searched for and then if other related alarm/trouble items exist, each will be selected automatically. This will enable the operator to confirm, independently of his or her experience or skills, whether there is alarm/trouble occurrence information which are likely to have some association with the probable causes. When the 'Display' button 62 is further selected on the event occurrence information screen 56, chronological data on the alarm/trouble occurrence information selected as described above is graphically displayed, together with engine on/off information and key switch on/off information, on the chronological event information display screen 57. The operator can therefore confirm the chronological order of a plurality of highly correlated alarm/trouble occurrence time values while confirming the on/off states of the engine and the key switch, and thus enhance cause-checking accuracy of the alarms and trouble.

If alarm/trouble cause checking is to be further advanced, selecting one of the multiple pieces of alarm/trouble occurrence information displayed on the chronological event information display screen 57, and the corresponding occurrence time of the day, will display the chronological operational-state physical quantities display screen 80. On the chronological operational-state physical quantities display screen 80, the relevant operational-state physical quantities, related as useful information for cause checking of the alarm/trouble occurrence information selected on the chronological event information display screen 57, is extracted automatically and the corresponding chronological data is graphically displayed with the chronological data relating to the key switch on/off information. This further enhances cause-checking accuracy of the alarms and trouble. In addition, faster response by the serviceman as well as faster alarm/trouble cause checking is implemented.

Furthermore, for example, if at the screen of the user-side personal computer 4, the 'Save Settings' button 67 on the event information graph display screen 57, the 'Save Settings' button 92 on the chronological display setup screen 81, or the 'Save Settings' button 128 on the scatter diagram display setup screen 120 is selected (or the 'Send Mail' button displayed by selecting the 'Send Mail' button 148 of the toolbar 53 or the 'Files' button 140 of the menu bar 54 is selected), a display setup file (more specifically, the setup file for chronological display of event information, the setup file for chronological display of operational-state physical quantities, or the setup file for scatter diagram display of operational-state physical quantities) will be created. The created files will also be deliverable to other user-side personal computers 4, the main server 5, and the intermediate server 6. Thus, screen display reproduction at the main server 5 and the intermediate server 6 will be further achieved. Therefore, even in the case that it is difficult, for example, for the user or the serviceman at the working site to check the probable causes of an alarm or trouble, the user or the serviceman can readily obtain hints and suggestions from the dealer or the manufacturer, thus taking rapid actions.

### Description of the Reference Numerals

- 1: Hydraulic excavator
- 4: User-side personal computer
- 5: Main server
- 6: Intermediate server
- 56: Event occurrence information display screen
- 57: Chronological event information display screen
- 61: Related check button
- 71: Event information listing screen
- 74: Time calculation button
- 80: Chronological operational-state physical quantities display screen
- 108: Operational-state physical quantities listing screen
- 121: Operational-state physical quantities scatter diagram display screen

## Claims

1. A diagnostic information supply apparatus (4) for a construction machine, provided at a position remote from the construction machine in order to acquire chronological data relating to alarm/trouble occurrence information on the machine, chronological data relating to engine on/off and engine key switch on/off information, and chronological data relating to operational-state physical quantities, the apparatus comprising:
item list display means (4D) that displays an item list of acquired alarm/trouble occurrence information;
**characterized in** further comprising:
first alarm/trouble occurrence information selection means (60) for an operator to select first alarm/trouble occurrence information from the item list of acquired alarm/trouble occurrence information, displayed by the item list display means;
first storage means (4ea) that previously stores combinations of alarms/trouble events which are likely to have some association with probable causes;
second alarm/trouble occurrence information selection means (4c) that automatically selects second alarm/trouble occurrence information with respect to the first alarm/trouble occurrence information selected by the first alarm/trouble occurrence information selection means, on the basis of the combination prestored by the first storage means; and
alarm/trouble data display means (4D) that displays, together with the chronological data relating to the engine on/off and key switch on/off information, chronological data relating to the alarm/trouble occurrence information selected by at least the first alarm/trouble occurrence information selection means (60) among the first and second alarm/trouble occurrence information selection means.

2. The apparatus according to claim 1,
wherein, when a command that means automatic selection of the second alarm/trouble occurrence information is issued through operator entry, the second alarm/trouble occurrence information selection means (4c) selects the second alarm/trouble occurrence information with respect to the first alarm/trouble occurrence information selected by the first alarm/trouble occurrence information selection means (60), on the basis of the combination prestored by the first storage means.

3. The apparatus according to claim 1 or 2,
wherein the alarm/trouble data display means (4D) includes graph display means that displays a chronological event information display screen (57) to show in graphical form, together with the chronological data relating to the engine on/off and key switch on/off information, the chronological data relating to the alarm/trouble occurrence information selected by at least the first alarm/trouble occurance information selection means (60) among the first and second alarm/trouble occurrence information selection means.

4. The apparatus according to claim 3, further comprising:
third alarm/trouble occurrence information selection means (57) for the operator to select one piece of alarm/trouble occurrence information and occurrence time of the alarm/trouble on the chronological event information display screen (57) displayed by the graph display means, and then to specify switching to a chronological operational-state physical quantities display screen (80);
second storage means (4ea)that previously stores combinations of alarms/trouble event and operational-state physical quantities as useful information for cause checking of the alarms/trouble event;
operational-state physical quantities selection means (4c) that selects operational-state physical quantities with respect to the alarm/trouble occurrence information selected by the third alarm/trouble occurrence information selection means, on the basis of the combination prestored by the second storage means; and
operational-state data display means (4D) that displays the chronological operational-state physical quantities display screen (80) to show in graphical form, together with chronological data relating to the engine on/off and key switch on/off information, chronological data relating to the operational-state physical quantities selected by the operational-state physical quantities selection means in the period that is set so as to include the occurrence time of the alarm/trouble selected by the third alarm/trouble occurrence information selection means.

5. The apparatus according to any one of claims 1 to 4,
wherein the alarm/trouble data display means (4D) includes listing means (71) that displays in list form, together with the chronological data relating to the engine on/off and key switch on/off information, the chronological data on the alarm/trouble occurrence information selected by at least the first alarm/trouble occurrence information selection means among the first and second alarm/trouble occurrence information selection means.

6. The apparatus according to claim 5,
wherein the listing means displays (71) starting and ending time of alarm/trouble occurrence, engine on/off switching time, and key switch on/off switching time together, as well as differences in time among the three kinds of time.

## Patentansprüche

1. Vorrichtung (4) zur Lieferung von Diagnose-Informationen für eine Baumaschine, die an einem von der Baumaschine entfernt liegenden Ort vorgesehen ist, um chronologische Daten, die sich auf Informationen zum Auftreten eines Alarms/einer Störung bei der Maschine beziehen, chronologische Daten, die sich auf Informationen zum EIN-/AUS-Zustand des Motors und zum EIN-/AUS-Zustand des Schlüsselschalters des Motors beziehen, sowie chronologische Daten zu gewinnen, die sich auf physikalische Größen zum Betriebszustand beziehen,
wobei die Vorrichtung umfasst:
eine Anzeigeeinrichtung (4D) für eine Postenliste, die eine Postenliste von gewonnenen Informationen zum Auftreten eines Alarms/einer Störung anzeigt,
**dadurch gekennzeichnet, dass** sie ferner umfasst:
eine erste Auswahleinrichtung (60) zur Auswahl von Informationen zum Auftreten eines Alarms/einer Störung, die es einer Bedienungsperson erlaubt, erste Informationen zum Auftreten eines Alarms/einer Störung aus der Postenliste von gewonnenen Informationen zum Auftreten eines Alarms/einer Störung, die durch die Anzeigeeinrichtung für eine Postenliste angezeigt werden, auszuwählen,
eine erste Speichereinrichtung (4ea), in der vorher Kombinationen von Alarm-/ Störungs-Ereignissen gespeichert sind, die wahrscheinlich in irgendeiner Verbindung mit möglichen Ursachen stehen,
eine zweite Auswahleinrichtung (4c) zur Auswahl von Informationen zum Auftreten eines Alarms/einer Störung, die automatisch zweite Informationen zum Auftreten eines Alarms/einer Störung in Bezug auf die ersten Informationen zum Auftreten eines Alarms/einer Störung, die durch die erste Auswahleinrichtung zur Auswahl von Informationen zum Auftreten eines Alarms/einer Störung ausgewählt wurden, auf der Basis der vorher durch die erste Speichereinrichtung gespeicherten Kombination auswählt,
und
eine Anzeigeeinrichtung (4D) für Alarm-/ Störungs-Daten, die zusammen mit den chronologischen Daten, die sich auf Informationen zum EIN-/AUS-Zustand des Motors und zum EIN-/AUS-Zustand des Schlüsselschalters des Motors beziehen, chronologische Daten anzeigt, die sich auf die Informationen zum Auftreten eines Alarms/einer Störung beziehen, die zumindest durch die erste Auswahleinrichtung (60) zur Auswahl von Informationen zum Auftreten eines Alarms/einer Störung unter der ersten und der zweiten Auswahleinrichtung zur Auswahl von Informationen zum Auftreten eines Alarms/einer Störung ausgewählt wurden.

2. Vorrichtung nach Anspruch 1,
bei der, wenn ein Befehl, der eine automatische Auswahl der zweiten Informationen zum Auftreten eines Alarms/einer Störung bedeutet, durch die Eingabe der Bedienungsperson ausgegeben wird, die zweite Auswahleinrichtung (4c) zur Auswahl von Informationen zum Auftreten eines Alarms/einer Störung die zweiten Informationen zum Auftreten eines Alarms/einer Störung in Bezug auf die ersten Informationen zum Auftreten eines Alarms/einer Störung, die durch die erste Auswahleinrichtung (60) zur Auswahl von Informationen zum Auftreten eines Alarms/einer Störung ausgewählt wurden, auf der Basis der vorher durch die erste Speichereinrichtung gespeicherten Kombination auswählt.

3. Vorrichtung nach Anspruch 1 oder 2,
bei der die Anzeigeeinrichtung (4D) für Alarm-/Störungs-Daten eine Graphik-Anzeigeeinrichtung umfasst, die ein Bildschirm-Bild (57) mit chronologischen Ereignis-Informationen anzeigt, das in graphischer Form zusammen mit den chronologischen Daten, die sich auf die Informationen zum EIN-/AUS-Zustand des Motors und zum EIN-/AUS-Zustand des Schlüsselschalters des Motors beziehen, die chronologischen Daten zeigt, die sich auf die Informationen zum Auftreten eines Alarms/einer Störung beziehen, die zumindest durch die erste Auswahleinrichtung (60) zur Auswahl von Informationen zum Auftreten eines Alarms/einer Störung unter der ersten und der zweiten Auswahleinrichtung zur Auswahl von Informationen zum Auftreten eines Alarms/einer Störung ausgewählt wurden.

4. Vorrichtung nach Anspruch 3, die ferner umfasst:
eine dritte Auswahleinrichtung (57) zur Auswahl von Informationen zum Auftreten eines Alarms/einer Störung, die es einer Bedienungsperson erlaubt, Informationen zum Auftreten eines Alarms/einer Störung oder die Zeit des Auftretens des Alarms/der Störung auf dem Bildschirm-Bild (57) mit chronologischen Ereignis-Informationen, das durch die Graphik-Anzeigeeinrichtung angezeigt wird, auszuwählen und dann festzulegen, dass zu einem Bildschirm-Bild (80) mit chronologischen physikalischen Größen zum Betriebszustand umgeschaltet wird,
eine zweite Speichereinrichtung (4ea), in der vorher Kombinationen von physikalischen Größen zu Alarm-/Störungs-Ereignissen und Betriebszuständen als nützliche Informationen zur Ermittlung der Ursache des Alarm-/ Störungs-Ereignisses gespeichert sind,
eine Auswahleinrichtung (4c) zur Auswahl von physikalischen Größen zum Betriebszustand, die physikalische Größen zum Betriebszustand in Bezug auf die Informationen zum Auftreten eines Alarms/einer Störung, die durch die dritte Auswahleinrichtung zur Auswahl von Informationen zum Auftreten eines Alarms/einer Störung ausgewählt wurden, auf der Basis der vorher durch die zweite Speichereinrichtung gespeicherten Kombination auswählt,
und
eine Anzeigeeinrichtung (4D) für Betriebszustands-Daten, die das Bildschirm-Bild (80) mit chronologischen physikalischen Größen zum Betriebszustand anzeigt, das in graphischer Form zusammen mit chronologischen Daten, die sich auf Informationen zum EIN-/AUS-Zustand des Motors und zum EIN-/AUS-Zustand des Schlüsselschalters des Motors beziehen, chronologische Daten zeigt, die sich auf die physikalischen Größen zum Betriebszustand, die durch die Auswahleinrichtung zur Auswahl von physikalischen Größen zum Betriebszustand ausgewählt wurden, in dem Zeitraum beziehen, der so festgelegt ist, dass er die Zeit des Auftretens des Alarms/der Störung einschließt, die durch die dritte Auswahleinrichtung zur Auswahl von Informationen zum Auftreten eines Alarms/einer Störung ausgewählt wurde.

5. Vorrichtung nach einem der Ansprüche 1 bis 4,
bei der die Anzeigeeinrichtung (4D) für Alarm-/Störungs-Daten eine Auflistungseinrichtung (71) umfasst, die in Listenform zusammen mit den chronologischen Daten, die sich auf die Informationen zum EIN-/AUS-Zustand des Motors und zum EIN-/AUS-Zustand des Schlüsselschalters des Motors beziehen, die chronologischen Daten zu den Informationen zum Auftreten eines Alarms/einer Störung zeigt, die zumindest durch die erste Auswahleinrichtung zur Auswahl von Informationen zum Auftreten eines Alarms/einer Störung unter der ersten und der zweiten Auswahleinrichtung zur Auswahl von Informationen zum Auftreten eines Alarms/einer Störung ausgewählt wurden.

6. Vorrichtung nach Anspruch 5, bei der die Auflistungseinrichtung (71) die Zeit des Beginns und die Zeit des Endes des Auftretens eines Alarms/einer Störung, die Zeit des Einschaltens/Ausschaltens des Motors und die Zeit des Einschaltens/Ausschaltens des Schlüsselschalters des Motors zusammen sowie Zeitdifferenzen zwischen den drei Arten von Zeiten anzeigt.

## Revendications

1. Appareil (4) de fourniture d'informations de diagnostic pour un engin de chantier, prévu en une position distante de l'engin de chantier afin d'acquérir des données chronologiques se rapportant à des informations de survenue d'alarme/mauvais fonctionnement sur l'engin, des données chronologiques se rapportant à des informations de marche/arrêt de moteur et des informations de marche/arrêt de commutateur à clef de moteur, et des données chronologiques se rapportant à des quantités physiques à l'état opérationnel, l'appareil comprenant :
un moyen (4D) d'affichage de liste d'éléments qui affiche une liste d'éléments d'informations de survenue d'alarme/mauvais fonctionnement acquises ;
**caractérisé en ce que** comprenant en outre :
un moyen (60) de sélection de première information de survenue d'alarme/mauvais fonctionnement pour qu'un opérateur sélectionne une première information de survenue d'alarme/mauvais fonctionnement dans la liste d'éléments d'informations de survenue d'alarme/mauvais fonctionnement acquises, affichée par le moyen d'affichage de liste d'éléments ;
un premier moyen (4ea) de stockage qui stocke au préalable des combinaisons d'événements d'alarmes/mauvais fonctionnement qui sont susceptibles d'avoir une association quelconque avec des causes probables ;
un moyen (4c) de sélection de deuxième information de survenue d'alarme/mauvais fonctionnement qui sélectionne automatiquement une deuxième information de survenue d'alarme/mauvais fonctionnement par rapport à la première information de survenue d'alarme / mauvais fonctionnement sélectionnée par le moyen de sélection de première information de survenue d'alarme/mauvais fonctionnement, sur la base de la combinaison pré-stockée par le premier moyen de stockage ; et
un moyen d'affichage (4D) de données d'alarme/mauvais fonctionnement qui affiche, en même temps que les données chronologiques se rapportant aux informations de marche/arrêt de moteur et de marche/arrêt de commutateur à clef, les données chronologiques se rapportant aux informations de survenue d'alarme/mauvais fonctionnement sélectionnées par au moins le moyen (60) de sélection de première information de survenue d'alarme/mauvais fonctionnement parmi les premier et deuxième moyens de sélection d'informations de survenue d'alarme/mauvais fonctionnement.

2. Appareil selon la revendication 1,
dans lequel, lorsqu'une commande qui signifie une sélection automatique de la deuxième information de survenue d'alarme/mauvais fonctionnement est émise par l'intermédiaire d'une entrée d'opérateur, le moyen (4c) de sélection de deuxième information de survenue d'alarme/mauvais fonctionnement sélectionne la deuxième information de survenue d'alarme/mauvais fonctionnement par rapport à la première information de survenue d'alarme/mauvais fonctionnement sélectionnée par le moyen (60) de sélection de première information de survenue d'alarme/mauvais fonctionnement, sur la base de la combinaison pré-stockée par le premier moyen de stockage.

3. Appareil selon la revendication 1 ou 2,
dans lequel le moyen d'affichage (4D) de données d'alarme/mauvais fonctionnement inclut un moyen d'affichage graphique qui affiche un écran d'affichage (57) d'informations d'événements chronologiques pour montrer sous forme graphique, en même temps que les données chronologiques se rapportant aux informations de marche/arrêt de moteur et de marche/arrêt de commutateur à clef, les données chronologiques se rapportant aux informations de survenue d'alarme/mauvais fonctionnement sélectionnées par au moins le moyen (60) de sélection de première information de survenue d'alarme/mauvais fonctionnement parmi les premier et deuxième moyens de sélection d'informations de survenue d'alarme/mauvais fonctionnement.

4. Appareil selon la revendication 3, comprenant en outre :
un moyen de sélection (57) de troisième information de survenue d'alarme/mauvais fonctionnement pour que l'opérateur sélectionne une information de survenue d'alarme/mauvais fonctionnement et un moment de survenue de l'alarme/mauvais fonctionnement sur l'écran d'affichage (57) d'informations d'événements chronologiques affiché par le moyen d'affichage graphique, et ensuite spécifie une commutation sur un écran d'affichage (80) de quantités physiques à l'état opérationnel chronologiques ;
un deuxième moyen (4ea) de stockage qui stocke au préalable des combinaisons d'un événement d'alarmes/mauvais fonctionnement et de quantités physiques à l'état opérationnel comme des informations utiles pour une recherche de cause de l'événement d'alarmes/mauvais fonctionnement ;
un moyen de sélection (4c) de quantités physiques à l'état opérationnel qui sélectionne des quantités physiques à l'état opérationnel par rapport à l'information de survenue d'alarme/mauvais fonctionnement sélectionnée par le moyen de sélection de troisième information de survenue d'alarme/mauvais fonctionnement, sur la base de la combinaison pré-stockée par le deuxième moyen de stockage ; et
un moyen d'affichage (4D) de données à l'état opérationnel qui affiche l'écran d'affichage (80) de quantités physiques à l'état opérationnel chronologiques pour montrer sous forme graphique, en même temps que les données chronologiques se rapportant aux informations de marche/arrêt de moteur et de marche/arrêt de commutateur à clef, les données chronologiques se rapportant aux quantités physiques à l'état opérationnel sélectionnées par le moyen de sélection de quantités physiques à l'état opérationnel sur la période qui est déterminée comme inclure le moment de survenue de l'alarme/mauvais fonctionnement sélectionné par le moyen de sélection de troisième information de survenue d'alarme/mauvais fonctionnement.

5. Appareil selon l'une quelconque des revendications 1 à 4,
dans lequel le moyen d'affichage (4D) de données d'alarme/mauvais fonctionnement inclut un moyen (71) de listage qui affiche sous forme de liste, en même temps que les données chronologiques se rapportant aux informations de marche/arrêt de moteur et de marche/arrêt de commutateur à clef, les données chronologiques sur les informations de survenue d'alarme/mauvais fonctionnement sélectionnées par au moins le moyen de sélection de première information de survenue d'alarme/mauvais fonctionnement parmi les premier et deuxième moyens de sélection d'informations de survenue d'alarme/mauvais fonctionnement.

6. Appareil selon la revendication 5,
dans lequel le moyen de listage affiche (71) le moment de début et de fin de survenue d'alarme/mauvais fonctionnement, le moment de commutation de marche/arrêt de moteur et le moment de commutation de marche/arrêt de commutateur à clef ensemble, ainsi que des différences de moment entre les trois sortes de moment.
